(19) Europäisches Patentamt
European Patent Office
Office européen des brevets

(11) **EP 4 171 159 A1**

(12) **EUROPEAN PATENT APPLICATION**
published in accordance with Art. 153(4) EPC

(43) Date of publication:
26.04.2023 Bulletin 2023/17

(21) Application number: 21930624.8

(22) Date of filing: 19.08.2021

(51) International Patent Classification (IPC):
**H04W 74/08** (2009.01)    **H04W 72/04** (2023.01)
**H04W 4/00** (2018.01)

(86) International application number:
**PCT/CN2021/113599**

(87) International publication number:
**WO 2023/019524 (23.02.2023 Gazette 2023/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: Shenzhen Transsion Holdings Co., Ltd.
Shenzhen, Guangdong 518057 (CN)

(72) Inventors:
• **ZHU, Rongchang**
  **Shenzhen**
  **Guangdong 518057 (CN)**
• **HUANG, Junwei**
  **Shenzhen**
  **Guangdong 518057 (CN)**

(74) Representative: **Elzaburu S.L.P.**
**Edificio Torre de Cristal**
**Paseo de la Castellana 259 C, planta 28**
**28046 Madrid (ES)**

(54) **INDICATION METHOD, COMMUNICATION DEVICE, COMMUNICATION SYSTEM AND STORAGE MEDIUM**

(57)    An indication method, a communication device, a communication system and a storage medium provided by embodiments of the present application relate to the field of communication. The method includes: determining or generating a corresponding random access preamble according to a device type of a terminal device; and sending the random access preamble to indicate the device type. In the solutions provided by the embodiments of the present application, since random access preambles determined or generated by different device types are different, device type identification can be realized on the basis of keeping the number of preambles of the common device unchanged.

Terminal device

Network device

S1, determine or generate a corresponding random access preamble according to a device type of the terminal device

S2, send the random access preamble to indicate the device type

S3, receive a random access preamble

S4, obtain, according to the random access preamble, the device type of the terminal device

FIG. 4

EP 4 171 159 A1

**Description**

**TECHNICAL FIELD**

The present application relates to the communication technology, and in particular, to an indication method, a communication device, a communication system and a storage medium.

**BACKGROUND**

A terminal device includes a normal type of common terminal device and a Redcap (Reduced Capability, reduced capability) terminal device. During random access, a network device identifies the type of the terminal device, so that subsequent resource allocation to different types of terminal devices is more flexible.
In some implementations, different preambles can be set to distinguish the common terminal device and the Redcap terminal device. However, since the number of preambles carried in a random access occasion is limited, if some preambles are reserved for the Redcap terminal device, available preambles for the common terminal device will be reduced.
The foregoing description is intended to provide general background information and does not necessarily constitute the prior art.

**SUMMARY**

In view of the above technical problem, the present application provides an indication method, a communication device, a communication system and a storage medium, which can realize device type identification on the basis of keeping the number of preambles of the common device unchanged.
In a first aspect, an embodiment of the present application provides an indication method, applied to a terminal device, including the following steps:

S1, determining or generating a corresponding random access preamble according to a device type of the terminal device; and
S2, sending the random access preamble to indicate the device type.

Optionally, the device type includes at least one of the following: a reduced capability device and a common device.
Optionally, the step S1 includes:

obtaining a corresponding logical root sequence index according to the device type; and

determining or generating the random access preamble according to the logical root sequence index.

Optionally, the device type is the reduced capability device, and the obtaining the corresponding logical root sequence index according to the device type includes:

obtaining a first parameter, a first logical root sequence index, and the number of a first preamble of the reduced capability device;
determining, according to the first parameter, a cyclic shift step value of the reduced capability device; and
obtaining, according to the cyclic shift step value of the reduced capability device, the first logical root sequence index and the number of the first preamble, a second logical root sequence index.

Optionally, the first logical root sequence index is available to the common device; and the second logical root sequence index is available to the reduced capability device.
Optionally, the determining, according to the first parameter, the cyclic shift step value of the reduced capability device includes:

determining, according to the first parameter, a cyclic shift parameter of the reduced capability device; and
determining, according to the cyclic shift parameter of the reduced capability device, the cyclic shift step value of the reduced capability device.

Optionally, the cyclic shift parameter of the reduced capability device and the first parameter meet the following

condition:

$$D = \begin{cases} x \bmod 8 + 8 & RSRP \le TH1, \quad x \ne 0 \\ x & RSRP > TH1 \end{cases}$$

where the 'D' is the cyclic shift parameter of the reduced capability device, the 'x' is the first parameter configured by a high layer, the 'RSRP' is reference signal received power of the reduced capability device, and the 'TH1' is a preset threshold.

Optionally, the cyclic shift parameter of the reduced capability device and the first parameter meet the condition:

$$D = \begin{cases} (x + y) \bmod 8 + 8 & RSRP \le TH1, (x + y) \ne 0 \\ (x + y) & RSRP > TH1 \end{cases}$$

where the 'D' is the cyclic shift parameter of the reduced capability device, the 'x' is the first parameter, the 'y' is the cyclic shift parameter of the common device, the 'RSRP' is reference signal received power of the reduced capability device, and the 'TH1' is a preset threshold.

Optionally, the first parameter includes at least one of the following:

a first preset value;
a parameter configured by a high layer;
a parameter configured by radio resource control signaling; and
a parameter configured by a system message.

Optionally, the obtaining the second logical root sequence index according to the cyclic shift step value of the reduced capability device, the first logical root sequence index and the number of the first preamble includes:
obtaining the second logical root sequence index according to the cyclic shift step value of the reduced capability device, a last index of the first logical root sequence and the number of the first preamble.

Optionally, the first logical root sequence index and the second logical root sequence index are numerically consecutive.

Optionally, the obtaining the second logical root sequence index according to the cyclic shift step value of the reduced capability device, the first logical root sequence index and the number of the first preamble includes:

obtaining a second parameter; and
obtaining the second logical root sequence index according to the second parameter, the cyclic shift step value of the reduced capability device, the first logical root sequence index and the number of the first preamble.

Optionally, the second parameter includes at least one of the following:

a second preset value;
a parameter configured by radio resource control signaling; and
a parameter configured by a system message.

Optionally, it further includes at least one of the following:

the number of the first preamble is equal to the number of a second preamble;
the number of the first preamble is less than the number of the second preamble; and
the number of the first preamble is greater than the number of the second preamble.

Optionally, the second preamble is available to the common device.

Optionally, the first preamble includes at least one of the following:

a preamble for contention-based random access;
a preamble for non-contention based random access; and
a preamble for random access for other purposes.

In a second aspect, an embodiment of the present application provides an indication method, applied to a terminal device, including the following steps:

> S11, determining or generating a corresponding random access preamble according to a second logical root sequence index; and
>
> S12, sending the random access preamble to indicate a device type of the terminal device.

Optionally, the device type includes at least one of the following: a reduced capability device and a common device.

Optionally, a method for determining or generating the second logical root sequence index includes: obtaining, according to the device type, the second logical root sequence index.

Optionally, the device type is a reduced capability device, and the obtaining, according to the device type, the second logical root sequence index includes:

> obtaining a first parameter, a first logical root sequence index, and the number of the first preamble of the reduced capability device;
>
> determining, according to the first parameter, a cyclic shift step value of the reduced capability device; and obtaining the second logical root sequence index according to the cyclic shift step value of the reduced capability device, the first logical root sequence index and the number of the first preamble.

Optionally, the first logical root sequence index is available to a common terminal device; and the second logical root sequence index is available to a reduced capability terminal device.

Optionally, the determining, according to the first parameter, the cyclic shift step value of the reduced capability device includes:

> determining, according to the first parameter, a cyclic shift parameter of the reduced capability device; and determining, according to the cyclic shift parameter of the reduced capability device, the cyclic shift step value of the reduced capability device.

Optionally, the cyclic shift parameter of the reduced capability device and the first parameter meet the following condition:

$$D = \begin{cases} x \bmod 8 + 8 & RSRP \le TH1, \quad x \ne 0 \\ x & RSRP > TH1 \end{cases}$$

where the 'D' is the cyclic shift parameter of the reduced capability device, the 'x' is the first parameter configured by a high layer, the 'RSRP' is reference signal received power of the reduced capability device, and the 'TH1' is a preset threshold.

Optionally, the cyclic shift parameter of the reduced capability device and the first parameter meet the following condition:

$$D = \begin{cases} (x + y) \bmod 8 + 8 & RSRP \le TH1, (x + y) \ne 0 \\ (x + y) & RSRP > TH1 \end{cases}$$

where the 'D' is the cyclic shift parameter of the reduced capability device, the 'x' is the first parameter, the 'y' is the cyclic shift parameter of the common device, the 'RSRP' is reference signal received power of the reduced capability device, and the 'TH1' is a preset threshold.

Optionally, the first parameter includes at least one of the following:

> a first preset value;
> a parameter configured by a high layer;
> a parameter configured by radio resource control signaling; and
> a parameter configured by a system message.

Optionally, the obtaining the second logical root sequence index according to the cyclic shift step value of the reduced capability device, the first logical root sequence index and the number of the first preamble includes: obtaining the second logical root sequence index according to the cyclic shift step value of the reduced capability device, a last index of the first logical root sequence and the number of the first preamble.

Optionally, the first logical root sequence index and the second logical root sequence index are numerically consecutive.

Optionally, the obtaining the second logical root sequence index according to the cyclic shift step value of the reduced capability device, the first logical root sequence index and the number of the first preamble includes:

obtaining a second parameter; and
obtaining the second logical root sequence index according to the second parameter, the cyclic shift step value of the reduced capability device, the first logical root sequence index and the number of the first preamble.

Optionally, the second parameter includes at least one of the following:

a second preset value;
a parameter configured by radio resource control signaling; and a parameter configured by a system message.

Optionally, it further includes at least one of the following:

the number of the first preamble is equal to the number of a second preamble;
the number of the first preamble is less than the number of the second preamble; and
the number of the first preamble is greater than the number of the second preamble.

Optionally, the second preamble is available to the common device.

Optionally, the first preamble includes at least one of the following:

a preamble for contention-based random access;
a preamble for non-contention based random access; and
a preamble for random access for other purposes.

In a third aspect, an embodiment of the present application provides an indication method, applied to a network device, including the following steps:

S3, receiving a random access preamble; and
S4, obtaining, according to the random access preamble, a device type of a terminal device.

Optionally, the device type includes at least one of the following: a reduced capability device and a common device.

Optionally, the obtaining, according to the random access preamble, the device type of the terminal device includes:

if the random access preamble corresponds to a first logical root sequence index, the device type is a common device; and/or,
if the random access preamble corresponds to a second logical root sequence index, the device type is a reduced capability device.

Optionally, the second logical root sequence index is determined or generated according to a first parameter, the first logical root sequence index and the number of a first preamble of the reduced capability device.

Optionally, the device type is a reduced capability device; and
the second logical root sequence index is determined or generated according to a cyclic shift step value of the reduced capability device, a last index of the first logical root sequence and the number of the first preamble.

Optionally, the cyclic shift step value of the reduced capability device is indicated by a cyclic shift parameter of the reduced capability device, and the first logical root sequence index and the second logical root sequence index are numerically consecutive.

Optionally, the device type is the reduced capability device; and
the second logical root sequence index is determined or generated according to the cyclic shift step value of the reduced capability device, a second parameter, the first logical root sequence index, and the number of the first preamble.

Optionally, the cyclic shift step value of the reduced capability device is indicated by the cyclic shift parameter of the reduced capability device.

Optionally, the cyclic shift parameter of the reduced capability device and the first parameter meet the following

condition:

$$D = \begin{cases} x \bmod 8 + 8 & RSRP \leq TH1, \quad x \neq 0 \\ x & RSRP > TH1 \end{cases}$$

where the 'D' is the cyclic shift parameter of the reduced capability device, the 'x' is the first parameter configured by a high layer, the 'RSRP' is reference signal received power of the reduced capability device, and the 'TH1' is a preset threshold.

Optionally, the cyclic shift parameter of the reduced capability device and the first parameter meet the following condition:

$$D = \begin{cases} (x+y) \bmod 8 + 8 & RSRP \leq TH1, (x+y) \neq 0 \\ (x+y) & RSRP > TH1 \end{cases}$$

where the 'D' is the cyclic shift parameter of the reduced capability device, the 'x' is the first parameter, the 'y' is the cyclic shift parameter of the common device, the 'RSRP' is reference signal received power of the reduced capability device, and the 'TH1' is a preset threshold.

Optionally, the first parameter includes at least one of the following:

a first preset value;
a parameter configured by a high layer;
a parameter configured by radio resource control signaling; and
a parameter configured by a system message.

Optionally, the second parameter includes at least one of the following:

a second preset value;
a parameter configured by radio resource control signaling; and
a parameter configured by a system message.

Optionally, it further includes at least one of the following:

the number of the first preamble is equal to the number of a second preamble;
the number of the first preamble is less than the number of the second preamble; and
the number of the first preamble is greater than the number of the second preamble.

Optionally, the first preamble is available to the reduced capability terminal device, and the second preamble is available to the common device.
Optionally, the first preamble includes at least one of the following:

a preamble for contention-based random access;
a preamble for non-contention based random access; and
a preamble for random access for other purposes.

In a fourth aspect, an embodiment of the present application provides an indication apparatus, including:

a processing module, configured to determine or generate a corresponding random access preamble according to a device type of the terminal device; and
a sending module, configured to send the random access preamble to indicate the device type.

Optionally, the device type includes at least one of the following: a reduced capability device and a common device.
Optionally, the processing module is specifically configured to:

obtain a corresponding logical root sequence index according to the device type; and
determine or generate the random access preamble according to the logical root sequence index.

Optionally, the device type is the reduced capability device, and the processing module is specifically configured to:

obtain a first parameter, a first logical root sequence index, and the number of a first preamble of the reduced capability device;

determine, according to the first parameter, a cyclic shift step value of the reduced capability device; and

obtain a second logical root sequence index according to the cyclic shift step value of the reduced capability device, the first logical root sequence index and the number of the first preamble.

Optionally, the first logical root sequence index is available to the common device; and the second logical root sequence index is available to the reduced capability device.

Optionally, the processing module is specifically configured to:

determine, according to the first parameter, a cyclic shift parameter of the reduced capability device; and

determine, according to the cyclic shift parameter of the reduced capability device, the cyclic shift step value of the reduced capability device.

Optionally, the cyclic shift parameter of the reduced capability device and the first parameter meet the following condition:

$$D = \begin{cases} x \bmod 8 + 8 & RSRP \le TH1, \quad x \ne 0 \\ x & RSRP > TH1 \end{cases}$$

where the 'D' is the cyclic shift parameter of the reduced capability device, the 'x' is the first parameter configured by a high layer, the 'RSRP' is reference signal received power of the reduced capability device, and the 'TH1' is a preset threshold.

Optionally, the cyclic shift parameter of the reduced capability device and the first parameter meet the following condition:

$$D = \begin{cases} (x + y) \bmod 8 + 8 & RSRP \le TH1, (x + y) \ne 0 \\ (x + y) & RSRP > TH1 \end{cases}$$

where the 'D' is the cyclic shift parameter of the reduced capability device, the 'x' is the first parameter, the 'y' is the cyclic shift parameter of the common device, the 'RSRP' is reference signal received power of the reduced capability device, and the 'TH1' is a preset threshold.

Optionally, the first parameter includes at least one of the following:

a first preset value;
a parameter configured by a high layer;
a parameter configured by radio resource control signaling; and
a parameter configured by a system message.

Optionally, the processing module is specifically configured to:
obtain the second logical root sequence index according to the cyclic shift step value of the reduced capability device, a last index of the first logical root sequence and the number of the first preamble.

Optionally, the first logical root sequence index and the second logical root sequence index are numerically consecutive.

Optionally, the processing module is specifically configured to:

obtain a second parameter; and
obtain the second logical root sequence index according to the second parameter, the cyclic shift step value of the reduced capability device, the first logical root sequence index and the number of the first preamble.

Optionally, the second parameter includes at least one of the following:

a second preset value;

a parameter configured by radio resource control signaling; and
a parameter configured by a system message.

Optionally, it further includes at least one of the following:

the number of the first preamble is equal to the number of a second preamble;
the number of the first preamble is less than the number of the second preamble; and
the number of the first preamble is greater than the number of the second preamble.

Optionally, the second preamble is available to the common device.
Optionally, the first preamble includes at least one of the following:

a preamble for contention-based random access;
a preamble for non-contention based random access; and
a preamble for random access for other purposes.

In a fifth aspect, an embodiment of the present application provides an indication apparatus, including:

a processing module, configured to determine or generate a corresponding random access preamble according to a second logical root sequence index; and
a sending module, configured to send the random access preamble to indicate a device type of the terminal device.

Optionally, the device type includes at least one of the following: a reduced capability device and a common device.
Optionally, the processing module is further configured to:
obtain, according to the device type, the second logical root sequence index.
Optionally, the device type is the reduced capability device, and the processing module is further configured to:

obtain a first parameter, a first logical root sequence index, and the number of the first preamble of the reduced capability device;
determine, according to the first parameter, a cyclic shift step value of the reduced capability device; and
obtain the second logical root sequence index according to the cyclic shift step value of the reduced capability device, the first logical root sequence index and the number of the first preamble.

Optionally, the first logical root sequence index is available to a common terminal device; and the second logical root sequence index is available to a reduced capability terminal device.
Optionally, the processing module is specifically further configured to:

determine, according to the first parameter, a cyclic shift parameter of the reduced capability device; and
determine, according to the cyclic shift parameter of the reduced capability device, the cyclic shift step value of the reduced capability device.

Optionally, the cyclic shift parameter of the reduced capability device and the first parameter meet the following condition:

$$D = \begin{cases} x \bmod 8 + 8 & RSRP \leq TH1, \ x \neq 0 \\ x & RSRP > TH1 \end{cases}$$

where the 'D' is the cyclic shift parameter of the reduced capability device, the 'x' is the first parameter configured by a high layer, the 'RSRP' is reference signal received power of the reduced capability device, and the 'TH1' is a preset threshold.
Optionally, the cyclic shift parameter of the reduced capability device and the first parameter meet the following condition:

$$D = \begin{cases} (x + y) \bmod 8 + 8 & RSRP \leq TH1, (x + y) \neq 0 \\ (x + y) & RSRP > TH1 \end{cases}$$

where the 'D' is the cyclic shift parameter of the reduced capability device, the 'x' is the first parameter, the 'y' is the cyclic shift parameter of the common device, the 'RSRP' is reference signal received power of the reduced capability device, and the 'TH1' is a preset threshold.

Optionally, the first parameter includes at least one of the following:

a first preset value;
a parameter configured by a high layer;
a parameter configured by radio resource control signaling; and a parameter configured by a system message.

Optionally, the processing module is further configured to:
obtain the second logical root sequence index according to the cyclic shift step value of the reduced capability device, a last index of the first logical root sequence and the number of the first preamble.

Optionally, the first logical root sequence index and the second logical root sequence index are numerically consecutive.

Optionally, the processing module is further configured to:

obtain a second parameter; and
obtain the second logical root sequence index according to the second parameter, the cyclic shift step value of the reduced capability device, the first logical root sequence index and the number of the first preamble.

Optionally, the second parameter includes at least one of the following:

a second preset value;
a parameter configured by radio resource control signaling; and
a parameter configured by a system message.

Optionally, it further includes at least one of the following:

the number of the first preamble is equal to the number of a second preamble;
the number of the first preamble is less than the number of the second preamble; and
the number of the first preamble is greater than the number of the second preamble.

Optionally, the second preamble is available to the common device.

Optionally, the first preamble includes at least one of the following:

a preamble for contention-based random access;
a preamble for non-contention based random access; and
a preamble for random access for other purposes.

In a sixth aspect, an embodiment of the present application provides an indication apparatus, including:

a receiving module, configured to receive a random access preamble; and
an obtaining module, configured to obtain, according to the random access preamble, a device type of a terminal device.

Optionally, the device type includes at least one of the following: a reduced capability device and a common device.

Optionally, the obtaining module is specifically configured to:

if the random access preamble corresponds to a first logical root sequence index, the device type is a common device; and/or
if the random access preamble corresponds to a second logical root sequence index, the device type is a reduced capability device.

Optionally, the second logical root sequence index is determined or generated according to the first parameter, the first logical root sequence index and the number of the first preamble of the reduced capability device.

Optionally, the device type is a reduced capability device; and
the second logical root sequence index is determined or generated according to a cyclic shift step value of the reduced capability device, a last index of the first logical root sequence and the number of the first preamble.

Optionally, the cyclic shift step value of the reduced capability device is indicated by a cyclic shift parameter of the reduced capability device, and the first logical root sequence index and the second logical root sequence index are numerically consecutive.

Optionally, the device type is the Redcap device; and

the second logical root sequence index is determined or generated according to the cyclic shift step value of the reduced capability device, a second parameter, the first logical root sequence index, and the number of the first preamble.

Optionally, the cyclic shift step value of the reduced capability device is indicated by the cyclic shift parameter of the reduced capability device.

Optionally, the cyclic shift parameter of the reduced capability device and the first parameter meet the following condition:

$$D = \begin{cases} x \bmod 8 + 8 & RSRP \leq TH1, \quad x \neq 0 \\ x & RSRP > TH1 \end{cases}$$

where the 'D' is the cyclic shift parameter of the reduced capability device, the 'x' is the first parameter configured by a high layer, the 'RSRP' is reference signal received power of the reduced capability device, and the 'TH1' is a preset threshold.

Optionally, the cyclic shift parameter of the reduced capability device and the first parameter meet the following condition:

$$D = \begin{cases} (x + y) \bmod 8 + 8 & RSRP \leq TH1, (x + y) \neq 0 \\ (x + y) & RSRP > TH1 \end{cases}$$

where the 'D' is the cyclic shift parameter of the reduced capability device, the 'x' is the first parameter, the 'y' is the cyclic shift parameter of the common device, the 'RSRP' is reference signal received power of the reduced capability device, and the 'TH1' is a preset threshold.

Optionally, the first parameter includes at least one of the following:

a first preset value;
a parameter configured by a high layer;
a parameter configured by radio resource control signaling; and
a parameter configured by a system message.

Optionally, the second parameter includes at least one of the following:

a second preset value; and
a parameter configured by radio resource control signaling; and a parameter configured by a system message.

Optionally, it further includes at least one of the following:

the number of the first preamble is equal to the number of a second preamble;
the number of the first preamble is less than the number of the second preamble; and
the number of the first preamble is greater than the number of the second preamble.

Optionally, the first preamble is available to the reduced capability terminal device, and the second preamble is available to the common device.

Optionally, the first preamble is used for at least one of the following:

a preamble for contention-based random access;
a preamble for non-contention based random access; and
a preamble for random access for other purposes.

In a seventh aspect, an embodiment of the present application provides a communication system, including:

a terminal device, configured to perform the method according to the first aspect or the second aspect; and

a network device, configured to perform the method according to the third aspect.

In an eighth aspect, an embodiment of the present application provides a communication device, which includes a memory and a processor;

the memory is configured to store program instructions; and
the processor is configured to call the program instructions in the memory to perform the method according to any one of the above.

In a ninth aspect, an embodiment of the present application provides a readable storage medium having stored thereon a computer program which, when executed, implements the method according to any one of the above.
In a tenth aspect, an embodiment of the present application provides a computer program product including a computer program which, when executed, implements the method according to any one of the above.
According to the indication method, the communication device, the communication system, and the storage medium provided by the embodiments of the present application, the terminal device first determines or generates the corresponding random access preamble according to its device type, and then sends the random access preamble. After the network device receives the random access preamble, since the random access preamble is determined or generated according to the device type of the terminal device, the network device can obtain the device type of the terminal device according to the random access preamble. According to the solutions provided by the embodiments of the present application, since the random access preambles determined or generated by different device types are different, the identification of a device type can be realized on the basis of keeping the number of preambles of the common device unchanged.

**BRIEF DESCRIPTION OF THE DRAWINGS**

The accompanying drawings herein are incorporated in and constitute a part of this specification, illustrate embodiments consistent with the present application, and are used, together with the specification, to explain the principles of the present application. In order to illustrate the technical solution of the embodiments of the present application more clearly, the accompanying drawings required for the description of the embodiments will be briefly introduced below. Obviously, for those of ordinary skill in the art, other accompanying drawings can also be obtained from these accompanying drawings without creative effort.

FIG. 1 is a schematic diagram of an application scenario according to an embodiment of the present application;
FIG. 2 is a schematic diagram of a four-step random access process according to an embodiment of the present application;
FIG. 3 is a schematic diagram of a two-step random access process according to an embodiment of the present application;
FIG. 4 is a signaling diagram of an indication method according to an embodiment of the present application;
FIG. 5 is a schematic flowchart of obtaining a random access preamble according to an embodiment of the present application;
FIG. 6 is a schematic flowchart of an indication method according to an embodiment of the present application;
FIG. 7 is a schematic flowchart of an indication method according to an embodiment of the present application;
FIG. 8 is a schematic diagram of multiple random access preambles according to an embodiment of the present application;
FIG. 9 is first schematic structural diagram of an indication apparatus according to an embodiment of the present application;
FIG. 10 is second schematic structural diagram of an indication apparatus according to an embodiment of the present application;
FIG. 11 is third schematic structural diagram of an indication apparatus according to an embodiment of the application;
FIG. 12 is a schematic structural diagram of a communication device according to an embodiment of the present application;
FIG. 13 is a schematic structural diagram of hardware of a mobile terminal according to an embodiment of the present application; and
FIG. 14 is an architecture diagram of a communication network system according to an embodiment of the present application.

Implementation, functional characteristics and advantages of the objection of the present application will be further described with reference to the accompanying drawings in combination with the embodiments. Specific embodiments of the present application have been shown by the above accompanying drawings, and will be described in more detail hereinafter. These accompanying drawings and written descriptions are not intended to limit the scope of the concepts of the present application in any way, but to illustrate the concepts of the present application to those skilled in the art by referring to specific embodiments.

## DESCRIPTION OF EMBODIMENTS

Exemplary embodiments will be described in detail herein, and examples of which are illustrated in the accompanying drawings. In the case that the following description refers to the accompanying drawings, unless otherwise indicated, the same numbers in different drawings represent the same or similar elements. The implementations described in the following exemplary embodiments do not represent all the implementations consistent with the present application. On the contrary, they are only examples of apparatuses and methods consistent with some aspects of the present application as detailed in the appended claims.

In order to better understand the technical solution of the present application, related concepts and technologies involved in the present application are introduced below.

Terminal device: a terminal device can be a device that includes wireless transceiver functions and can cooperate with a network device to provide communication services for a user. Specifically, the terminal device may refer to a user equipment (User Equipment, UE), an access terminal, a subscriber unit, a subscriber station, a mobile radio station, a mobile station, a remote station, a remote terminal, a mobile device, a user terminal, a terminal, a wireless communication device, a user agent or a user apparatus. For example, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or other processing devices connected to a wireless modem, an on-board device, a wearable device, a terminal device in a future 5G network or in a network emerging after 5G, etc.

Network device: a network device can be a device used to communicate with the terminal device, for example, it may be a base transceiver station (base transceiver station, BTS) in a global system for mobile communication (global system for mobile communication, GSM) or a code division multiple access (code division multiple access, CDMA) communication system, it can also be a NodeB (NodeB, NB) in a wideband code division multiple access (wideband code division multiple access, WCDMA) system, or an evolved Node B (evolutional Node B, eNB or eNodeB) in a LTE system, or the network device can be a relay station, a access point, an on-board device, a wearable device, a network-side device in a future 5G network or a network emerging after 5G, or a network device in the future evolved public land mobile network (public land mobile network, PLMN), etc.

The network device involved in the embodiments of the present application may also be referred to as a radio access network (radio access network, RAN) device, which is connected with the terminal device for receiving data from the terminal device and then sending the data to a core network device. The RAN device corresponds to different devices in different communication systems, for example, it corresponds to a base transceiver station and a base station controller in the 2G system, to a NodeB and a radio network controller (radio network controller, RNC) in the 3G system, to a evolved NodeB (evolutional Node B, eNB) in the 4G system, and to the 5G system in the 5G system, such as a access network device (for example, gNB, a centralized unit (CU) and a distributed unit (DU)) in new radio (New Radio, NR).

Random access: random access refers to a process that occurs before the step of transmitting a random access preamble by the terminal device to the step of establishing a basic signaling connection between the terminal device and the network device, and refers to a process of establishing a wireless link between the terminal device and the network device to obtain or restore uplink synchronization. Random access is a key step in a mobile communication system, which makes it possible to establish a communication connection between the terminal device and the network device. The terminal device exchanges information with the network device through random access, and can also achieve uplink synchronization through random access.

Preamble: a preamble is a series of sequences sent by a terminal device to apply for network access, including but not limited to a gold sequence, an m sequence, a ZC sequence, etc. In addition to the main sequence, the composition of the preamble may also include a cyclic prefix and guard time.

RedCap: Reduced Capability, Decreased Capability/reduced capability.
PRACH: Physical random-access channel, physical random-access channel.
RO: PRACH occasion, random-access occasion.
PBCH: Physical broadcast channel, physical broadcast channel.
SSB: Synchronization Signal and PBCH block, synchronization signal and PBCH block, which is composed of a Primary Synchronization Signal (Primary Synchronization Signal, PSS for short), a secondary synchronization signal (Secondary Synchronization signal, SSS for short), and a PBCH.
SI: System Information, system information.

RSRP: Reference Signal Receiving Power, reference signal receiving power.

In addition, it should be understood that in the description of the present application, words such as "first" and "second" are only used for the purpose of distinguishing the description, and should not be construed as indicating or implying relative importance, nor as indicating or implying order, also, it cannot be understood as indicating or implying the association relationship between similar nouns.

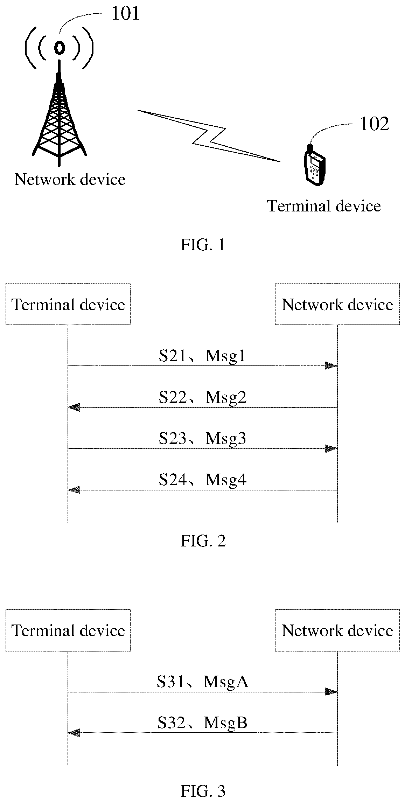

Hereinafter, with reference to FIG. 1, a scenario to which the communication method in the present application is applicable will be described.

FIG. 1 is a schematic diagram of an application scenario according to an embodiment of the present application. Referring to FIG. 1, a network device 101 and a terminal device 102 are included, and wireless communication and data transmission can be performed between the network device 101 and the terminal device 102.

Optionally, a network including the network device 101 and the terminal device 102 may also be referred to as a non-terrestrial network (Non-Terrestrial Network, NTN). Optionally, the NTN refers to a communication network between the terminal device and the satellite (which may also be referred to as the network device).

It can be understood that the technical solutions of the embodiments of the present application can be applied to the new radio (New Radio, NR) communication technology. The NR refers to a new generation of radio access network technology, which can be applied to the future evolution network, for example, to the future 5th generation mobile communication (the 5th Generation Mobile Communication, 5G) system. The solutions of the embodiments of the present application may also be applied to other wireless communication networks such as wireless Fidelity (Wireless Fidelity, WIFI) and long term evolution (Long Term Evolution, LTE), and the corresponding name may also be replaced by a name of a corresponding function in other wireless communication networks.

A network architecture and a service scenario described in the embodiments of the present application are for more clearly illustrating the technical solutions of the embodiments of the present application, and does not constitute a limitation onto the technical solutions provided in the embodiments of the present application. Those of ordinary skill in the art know that with the evolution of the network architecture and the emergence of new service scenarios, the technical solutions provided in the embodiments of the present application are also applicable to similar technical problems.

The background of the present application will be introduced below.

Three major application scenarios of 5G involve an enhanced mobile broadband (eMBB), a massive machine type communication (mMTC) and an ultra-reliable and low-latency communication (uRLLC). In addition to application scenarios such as the eMBB and the uRLLC, mid-range Internet of Things use cases, such as an industrial wireless sensor, a video surveillance, and a wearable device, require 5G terminals to reduce complexity, cost, size, and energy consumption. Therefore, a new type of terminal device, namely the low-complexity and low-cost terminal device or the reduced capability device (that is, RedCap UE), is proposed to better meet the requirements of these use cases.

The terminal device can include the reduced capability device and the common device. Since bandwidth, data rate, etc. of the reduced capability device are different from those of the common device, in the case that communication is performed between the terminal device and the network device, the network device first needs to identify the device type of the terminal device before interacting with the terminal device according to the device type.

In some implementations, the identification of the device type of the terminal device is mainly implemented in the random access process. The random access process includes contention-based random access and non-contention-based random access, which are introduced separately below.

FIG. 2 is a schematic diagram of a four-step random access process according to an embodiment of the present application, as shown in FIG. 2 including the following.

S21, the terminal device sends Msg1 to the network device.

Msg1 may also be referred to as msg1 or MSG1. Msg1 is used to transmit a random access preamble, which may also be referred to as a random access preamble sequence, or preamble, or preamble sequence.

Optionally, the terminal device may select a PRACH resource, select a preamble, and send the selected preamble on the selected PRACH resource.

S22, the network device sends Msg2 to the terminal device.

Msg2 may also be referred to as msg2 or MSG2. Msg2 includes the time-frequency resource determined by the network device determines to be used by the terminal device for sending the payload (payload).

S23, the terminal device sends Msg3 to the network device.

Msg3 may also be referred to as msg3 or MSG3. Msg3 is the first scheduled transmission in the random access process, and is used to send the payload (payload), for example, an RRC connection request message, a tracking area update message, etc.

S24, the network device sends Msg4 to the terminal device.

Msg4 may also be referred to as msg4 or MSG4, and is used to indicate whether the terminal device successfully accesses the network device.

In the contention-based random access, the device type indication of the reduced capability device is carried in Msgl.

FIG. 3 is a schematic diagram of a two-step random access process according to an embodiment of the present application. Referring to FIG. 3, the following are included.

S31, the terminal device sends MsgA to the network device.

MsgA may also be referred to as msgA or MSGA, and msgA includes the preamble and payload (for example, the RRC connection request message, tracking area update message, etc.).

S32, the network device sends msgB to the terminal device.

msgB may also be referred to as MsgB or MSGB, and is used to indicate whether the terminal device successfully accesses the network device.

In the process of the two-step random access, the device type indication of the reduced capability device is carried in MsgA.

If different preambles are used to distinguish the reduced capability device from the common device, when the number of preambles carried on one RO is still 64, in addition to the existing classification, the 64 preambles need to be reserved for random access of the reduced capability device, resulting in less preambles available to the ordinary user. In the case the reduced capability device is not available, it is still required to reserve the specific preamble, resulting in a waste of preamble resources. And if different ROs are used to distinguish the reduced capability device from the common device, it will also increase the overhead of the system.

Based on the above problems, the present application provides a solution to realize the identification of the reduced capability device on the premise of not increasing system overhead and keeping the number of preambles available to the common device remains unchanged. The solution of the present application will be introduced below.

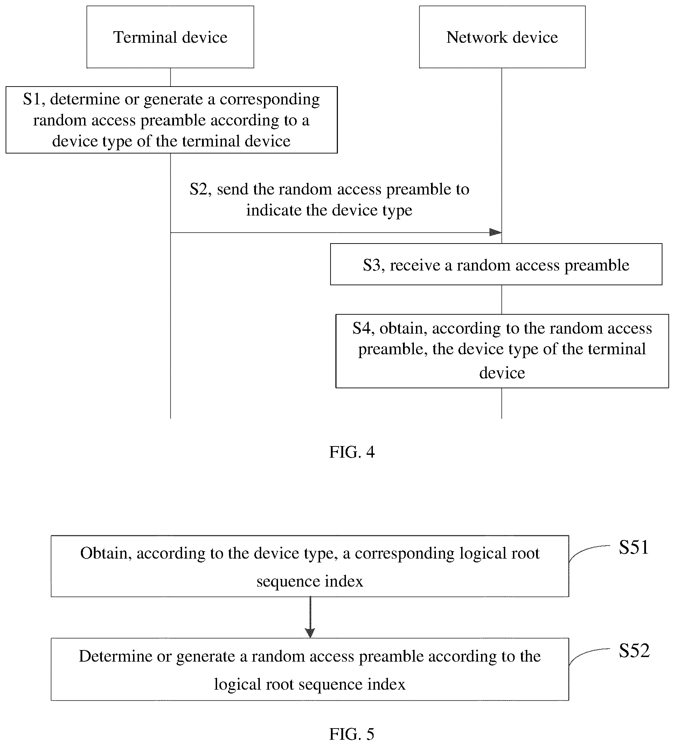

FIG. 4 is a signaling diagram of an indication method provided by an embodiment of the present application, as shown in FIG. 4, including the following.

S1, determine or generate a corresponding random access preamble according to the device type of the terminal device.

In this embodiment of the present application, the device type of the terminal device may be a reduced capability device or a common device. For terminal devices with different device types, the corresponding random access preambles are different.

For example, at a random access occasion, the corresponding random access preamble of the common device is one of the 64 preambles, these 64 preambles are determined or generated by way of the cyclic shift increment according to the logical root sequence index. At a random access occasion, the corresponding random access preamble of the reduced capability device is one of the n preambles, these n preambles are available to the reduced capability device and are different from the 64 preambles of the common device.

The preamble corresponding to the reduced capability device is different from the preamble corresponding to the common device, therefore, the corresponding random access preambles determined or generated for different device types are also different.

S2, send the random access preamble to indicate the device type.

After the corresponding random access preamble is determined or generated according to the device type of the terminal device, the terminal device will send the random access preamble to the network device during random access, and the random access preamble indicates the device type of the terminal device.

S3, receive the random access preamble.

S4, obtain, according to the random access preamble, the device type of the terminal device.

The network device receives the random access preamble, and then may obtain the device type of the terminal device according to the random access preamble.

For the common device, the preamble thereof is determined or generated by way of the cyclic shift increment according to the logical root sequence index, and the logical root sequence index is indicated by the high-layer parameter. Therefore, when network device received the random access preamble which is one of the above preambles, it can know the corresponding terminal device is a common device; otherwise, it can know that the corresponding terminal device is a reduced capability device.

In the indication method provided by the embodiment of the present application, the terminal device first determines or generates a corresponding random access preamble according to its device type, and then sends the random access preamble. After the network device receives the random access preamble, since the random access preamble is determined or generated according to the device type of the terminal device, the network device can obtain the device type of the terminal device according to the random access preamble. In the solutions provided by the embodiments of the present application, since the random access preambles determined or generated for different device types are different, the device type identification can be realized on the basis of keeping the number of preambles of the common device unchanged.

The solutions of the present application will be described in detail below with reference to the accompanying drawings.

FIG. 5 is a schematic flowchart of obtaining a random access preamble according to an embodiment of the present application, as shown in FIG. 5, including the following.

S51, obtain, according to the device type, a corresponding logical root sequence index.

The logical root sequence index can be used for subsequent preamble generation. In this embodiment of the present application, the device type of the terminal device may be a reduced capability device or a common device, and the logical root sequence indexes corresponding to different device types are different.

For the common device, the logical root sequence index can be obtained according to the high-layer parameter prach-RootSequenceIndex or rootSequenceIndex-BFR. For the reduced capability device, its logical root sequence index is different from that of the common device.

Optionally, the reduced capability device may first obtain the first parameter, the first logical root sequence index, and the number of the first preamble of the reduced capability device, and then the cyclic shift step value (the first Ncs value) of the reduced capability device is determined according to the first parameter, and the second logical root sequence index is obtained according to the cyclic shift step value of the reduced capability device, the first logical root sequence index, and the number of the first preamble.

Optionally, the first logical root sequence index is the index of the logical root sequence of the common device, and the second logical root sequence index is the index of the logical root sequence of the reduced capability device.

The generation method of the preamble of the terminal device is firstly introduced.

The process of generating the preamble by each terminal includes: determining a reference sequence, and performing a cyclic shift according to the reference sequence to generate a cyclic sequence. Optionally, the reference sequence $x_u(n)$ is calculated according to the following formula:

$$x_u(n) = e^{-j\frac{\pi u n(n+1)}{L_{RA}}}, \quad 0 \le n \le L_{RA} - 1, \tag{1}$$

Optionally, '$L_{RA}$' represents the length of a ZC sequence, the value of '$L_{RA}$' is determined by the preamble format, and the preamble format is determined by prach-ConfigurationIndex. 'u' is the physical root serial number, which is obtained by looking up a table according to the logical root serial number, and the logical root sequence number is configured by the second logical root sequence index.

After the reference sequence $x_u(n)$ is determined, the cyclic shift sequence $x_{u,v}(n)$ can be calculated according to the following formula:

$$x_{u,v}(n) = x_u((n + C_v) \bmod N_{ZC}), \tag{2}$$

Optionally, $C_v$ is a cyclic shift value that is determined by the following formula:

$$C_v = \begin{cases} vN_{CS} & v = 0,1,\ldots,\lfloor L_{RA}/N_{CS}\rfloor - 1, N_{CS} \ne 0 & \text{for unrestricted sets} \\ 0 & N_{CS} = 0 & \text{for unrestricted sets} \\ d_{start}\lfloor v/n_{shift}^{RA}\rfloor + (v \bmod n_{shift}^{RA})N_{CS} & v = 0,1,\ldots,w-1 & \text{for restricted sets typeA and B} \\ \overline{d}_{start} + (v-w)N_{CS} & v = w,\ldots,w+\overline{n}_{shift}^{RA}-1 & \text{for restricted sets typeB} \\ \overline{\overline{d}}_{start} + (v-w-\overline{n}_{shift}^{RA})N_{CS} & v = w+\overline{n}_{shift}^{RA},\ldots,w+\overline{n}_{shift}^{RA}+\overline{\overline{n}}_{shift}^{RA}-1 & \text{for restricted sets typeB} \end{cases} \tag{3}$$

For example, in the case that the corresponding preamble format is obtained according to prach-ConfigurationIndex, the value of length $L_{RA}$ of the preamble sequence can be obtained by looking up a table. Upon the parameter restrictedSetConfig or msgA-RestrictedSetConfig, the restricted set type selected in the case of calculating the cyclic shift value $C_v$ can be learnt, for example, it is an unrestricted set, and then, the cyclic shift value $C_v$ can be calculated, by combining with the cyclic shift step value Ncs.

Cyclic shift step value Ncs=13 is taken as an example, where $L_{RA}$ = 139 and $L_{RA}$ is the unrestricted set. According to formula (3), $C_v = vN_{CS} = 13v$ , and v=0,1,...,9.

Therefore, the following preambles can be obtained in sequence:

the first preamble: shift sequence $x_{u,0}(n) = x_u((n + C_0) \bmod 139) = x_u(n)$, with v=0;
the second preamble: shift sequence $x_{u,1}(n) = x_u((n + C_1) \bmod 139) = x_u((n+13) \bmod 139)$ , with v=1;

the tenth preamble: shift sequence $x_{u,9}(n) = x_u((n + C_9) \bmod 139) = x_u((n + 13*9) \bmod 139)$, with v=9.

In the case that the number of generated preambles is less than the number of preambles of the terminal device, the next logical root sequence index is required to be obtained, and then the cyclic shift sequence is continuously generated, according to the next logical root sequence index and the above solution, until the number of generated preambles meets the requirement.

For any terminal device, in the random access process, only one sequence with the length of $L_{RA}$ is selected and then sent to the network device.

Since in the process of generating the preamble, the cyclic shift value $C_V$ is used to generate the cyclic shift sequence, and the value of the cyclic shift value $C_V$ is related to the value of Ncs, the determined or generated preambles are also different in the case that the Ncs values are different.

For the common device, its Ncs value is indicated by the cyclic shift parameter. In the case that the cyclic shift parameter zeroCorrelationZoneConfig or msgA-ZeroCorrelationZoneConfig is configured by the high layer, the value of Ncs can be obtained according to Table 6.3.3.1-5 to Table 6.3.3.1-7.

In the embodiments of the present application, for the reduced capability device, its Ncs value is different from that of the common device, and the second logical root sequence index of the reduced capability device is also different from the first logical root sequence index of the common device, therefore, the preamble of the reduced capability device is also different from that of the common device.

The reduced capability device determines its cyclic shift step value, that is, the first Ncs value, according to the first parameter. Optionally, the reduced capability device may determine its cyclic shift parameter according to the first parameter, and then determine its first Ncs value according to its cyclic shift parameter.

A solution for determining a cyclic shift parameter for the reduced capability device is as follows:

$$D = \begin{cases} x \bmod 8 + 8 & RSRP \le TH1, \quad x \ne 0 \\ x & RSRP > TH1 \end{cases}, \qquad (4)$$

Optionally, the 'D' is the cyclic shift parameter of the reduced capability device, the 'x' is the first parameter configured by a high layer, the 'RSRP' is reference signal received power of the reduced capability device, and the 'TH1' is a preset threshold.

A solution for determining a cyclic shift parameter for the reduced capability device is as follows:

$$D = \begin{cases} (x + y) \bmod 8 + 8 & RSRP \le TH1, (x + y) \ne 0 \\ (x + y) & RSRP > TH1 \end{cases}, \qquad (5)$$

Optionally, the 'D' is the cyclic shift parameter of the reduced capability device, the 'x' is the first parameter, the 'y' is the cyclic shift parameter of the common device, the 'RSRP' is the reference signal received power of the reduced capability device, and the 'TH1' is the preset threshold.

Optionally, the first parameter may be the first preset value, or the parameter configured by the high layer, or the parameter configured by the RRC signaling, or the parameter configured by the system message.

In the above embodiments, the cyclic shift parameter of the reduced capability device is different from that of the common device. In the case that different types of terminal device use the same root sequence, different types of terminal devices adopt different cyclic shift parameters to avoid conflicts. In addition, different types of terminal devices use different cyclic shift parameters and different root sequences to generate preambles, which is more beneficial for the network device to quickly identify the device type of the terminal device.

Optionally, in formula (4) and formula (5), based on different reference signal received powers of the reduced capability device, the cyclic shift parameters are calculated in different ways. In the embodiments of the present application, by setting the preset threshold TH1, in the case that RSRP is less than or equal to the preset threshold TH1, the value of D is greater than or equal to 8, so that the cyclic shift parameter of the reduced capability device located at the edge of the cell is larger, and then the base station can better identify the edge reduced capability device.

After obtaining the cyclic shift parameter D of the reduced capability device, the first Ncs value of the reduced capability device may be obtained by looking up a table. Table 1 to Table 3 illustrate that how the first Ncs value is determined according to the cyclic shift parameter D of the reduced capability device. Optionally, the cyclic shift parameter D of the reduced capability device needs to meet the following requirement:

for example, for $\Delta f_{RA}$=1.25 kHz, for unrestricted set: Dmod16, for restricted set A, Dmodl5, for restricted set B, Dmod13;

for example, for $\Delta f_{RA}$=5kHz, for unrestricted set: Dmod16, for restricted set A, Dmod16, for restricted set B, Dmod14; and

for others, Dmod16.

It should be noted that Table 1 to Table 3 are only examples of determining the cyclic shift step value (the first Ncs value) of the reduced capability device according to the cyclic shift parameter D, and do not constitute a limitation onto the specific solution for determining the cyclic shift step value of the reduced capability device according to the cyclic shift parameter D.

Table 1 Value table of $N_{CS}$, in the case that $\Delta f_{RA}$ = 1.25

| D | $N_{CS}$ Value | | |
| --- | --- | --- | --- |
| | Unrestricted set | Restricted set A | Restricted set B |
| 0 | 0 | 15 | 15 |
| 1 | 13 | 18 | 18 |
| 2 | 15 | 22 | 22 |
| 3 | 18 | 26 | 26 |
| 4 | 22 | 32 | 32 |
| 5 | 26 | 38 | 38 |
| 6 | 32 | 46 | 46 |
| 7 | 38 | 55 | 55 |
| 8 | 46 | 68 | 68 |
| 9 | 59 | 82 | 82 |
| 10 | 76 | 100 | 100 |
| 11 | 93 | 128 | 118 |
| 12 | 119 | 158 | 137 |
| 13 | 167 | 202 | - |
| 14 | 279 | 237 | - |
| 15 | 419 | - | - |

Table 2 Value table of $N_{CS}$ , in the case that $\Delta f_{RA}$ = 5 kHz

| D | $N_{CS}$ Value | | |
| --- | --- | --- | --- |
| | Unrestricted set | Restricted set A | Restricted set B |
| 0 | 0 | 36 | 36 |
| 1 | 13 | 57 | 57 |
| 2 | 26 | 72 | 60 |
| 3 | 33 | 81 | 63 |
| 4 | 38 | 89 | 65 |
| 5 | 41 | 94 | 68 |
| 6 | 49 | 103 | 71 |
| 7 | 55 | 112 | 77 |
| 8 | 64 | 121 | 81 |

(continued)

| D | $N_{CS}$ Value | | |
| --- | --- | --- | --- |
| | Unrestricted set | Restricted set A | Restricted set B |
| 9 | 76 | 132 | 85 |
| 10 | 93 | 137 | 97 |
| 11 | 119 | 152 | 109 |
| 12 | 139 | 173 | 122 |
| 13 | 209 | 195 | 137 |
| 14 | 279 | 216 | - |
| 15 | 419 | 237 | - |

Table 3 Value table of $N_{CS}$, in the case that $L_{RA} \in \{139, 571, 1151\}$

| D | $N_{CS}$ Value | | |
| --- | --- | --- | --- |
| | $L_{RA}$ = 139 | $L_{RA}$ = 571 | $L_{RA}$ = 1151 |
| 0 | 0 | 0 | 0 |
| 1 | 2 | 8 | 17 |
| 2 | 4 | 10 | 21 |
| 3 | 6 | 12 | 25 |
| 4 | 8 | 15 | 30 |
| 5 | 10 | 17 | 35 |
| 6 | 12 | 21 | 44 |
| 7 | 13 | 25 | 52 |
| 8 | 15 | 31 | 63 |
| 9 | 17 | 40 | 82 |
| 10 | 19 | 51 | 104 |
| 11 | 23 | 63 | 127 |
| 12 | 27 | 81 | 164 |
| 13 | 34 | 114 | 230 |
| 14 | 46 | 190 | 383 |
| 15 | 69 | 285 | 575 |

The first Ncs value may be obtained by looking up a table through the cyclic shift parameter. Then, the reduced capability device may obtain the second logical root sequence index according to the first Ncs value, the first logical root sequence index, and the number of the first preamble.

Optionally, the first logical root sequence index may include one or more index values. After obtaining the first logical root sequence index, the start index of the second logical root sequence may be obtained according to the first logical root sequence index. Then, the final second logical root sequence index is determined according to the first Ncs value, the start index of the second logical root sequence, and the number of the first preamble. They are introduced separately below.

In a possible implementation, the second logical root sequence index may be obtained according to the first Ncs value, the last index of the first logical root sequence, and the number of the first preamble. Optionally, the first logical root sequence index and the second logical root sequence index are numerically consecutive.

For example, in the case that the first logical root sequence index is {7, 8}, the second logical root sequence index is {9, 10}, and 8 and 9 are numerically consecutive. In the above example, the same number of preambles as the number of the first preamble can be generated, based on {9, 10}. In the case that three logical root sequences are required to generate the same number of preambles as the number of the first preamble, the second logical root sequence index is {9,10,11}.

Optionally, the number of the first preamble may be greater than the number of the second preamble, may also be equal to the number of the second preamble, or may be less than the number of the second preamble. Optionally, the second preamble is available to the common device, and there are 64 second preambles.

In the above embodiment, in the process of generating the first preamble by the reduced capability device, according to the second logical root sequence index, since values of the first parameters are different, the values of cyclic shift parameters of the reduced capability device will be affected, thereby affecting the first Ncs value of the reduced capability device. Therefore, the number of index values included in the second logical root sequence index is determined by both the first parameters and the number of the first preamble.

For example, in the case that two root sequence indexes are required for generating 64 preambles of the common device, that is, the first logical root sequence index of the common device is: prach-RootSequenceIndex (or rootSequenceIndex-BFR)+{0,1}, that is, {prach -RootSequenceIndex, prach-RootSequenceIndex+1} or {rootSequenceIndex-BFR, rootSequenceIndex-BFR+1}; and in the case that two logical indexes are required for the reduced capability device to generate the number of preambles that satisfies the number of the first preamble, according to the first Ncs value determined by the first parameter, the second logical root sequence index of the reduced capability device is: {prach-RootSequenceIndex+2, prach-RootSequenceIndex+3} or {rootSequenceIndex-BFR+2, rootSequenceIndex-BFR+3}. prach-RootSequenceIndex+1, and prach-RootSequenceIndex+2, or, rootSequenceIndex-BFR+1, and rootSequenceIndex-BFR+2, are numerically consecutive. In this implementation, the logical root sequence index of the common device and the logical root sequence index of the reduced capability device are consecutive, which can ensure that the preamble selected by the reduced capability device has a good correlation.

In a possible implementation, the second parameter may be obtained first, and then the second logical root sequence index may be obtained according to the second parameter, the first Ncs value, the first logical root sequence index, and the number of the first preamble.

Let the second parameter be preamble_root_offset, and the first logical root sequence index of the common device is prach-RootSequenceIndex (or rootSequenceIndex-BFR), the start index of the second logical root sequence can be obtained, according to the parameters preamble_root_offset and prach-RootSequenceIndex (or rootSequenceIndex-BFR), that is, prach-RootSequenceIndex (or rootSequenceIndex-BFR)+preamble_root_offset.

In a possible implementation, the start index of the second logical root sequence may be the sum of the second parameter and the start indexes of the first logical root sequence. For example, when the second parameter preamble_root_offset=3, the start index of the second logical root sequence is prach-RootSequenceIndex (or rootSequenceIndex-BFR)+3; when the second parameter preamble_root_offset=4, the start index of the second logical root sequence is prach-RootSequenceIndex (or rootSequenceIndex-BFR)+4, etc. After the start index of the second logical root sequence is obtained, the second logical root sequence index can be obtained by combining the first Ncs value and the number of the first preamble.

In the above embodiment, a method, for obtaining the start index of the second logical root sequence through the second parameter, the first Ncs value and the first logical root sequence index, is introduced, where the start index of the second logical root sequence is the sum of the second parameter and the start indexes of the first logical root sequence. There are also multiple possible implementations for obtaining the second parameter.

In an implementation, the second parameter may be a second preset value, for example, it may be a fixed value agreed between the base station and the UE. For example, when the second parameter is a preset value of 3, the start index of the second logical root sequence may be: the start index of the first logical root sequence plus 3.

In an implementation, the second parameter preamble_root_offset can also be used as the high layer parameter, which is dynamically configured by the network device for the reduced capability device with different channel conditions. For example, when the high layer configuration preamble_root_offset=7, the start index of the second logical root sequence is prach-RootSequenceIndex (or rootSequenceIndex-BFR)+preamble_root_offset (=7).

In the case that the second parameter is the high layer parameter, optionally, the second parameter may be a parameter configured by the radio resource control signaling, and the network device may send the RRC signaling which includes the second parameter to the terminal device. When the terminal device receives the RRC signaling, it obtains the second parameter, and the start index of the second logical root sequence according to both the second parameter and the first logical root sequence. Optionally, the second parameter may also be a parameter configured by a master information block (Master Information Block, MIB)/system information block (System Information Blocks, SIB), the terminal device obtains the second parameter by obtaining the MIB/SIB, and obtains the start index of the second logical root sequence according to both the second parameter and the first logical root sequence.

S52, determine or generate a random access preamble according to the logical root sequence index.

After the logical root sequence index is obtained, the random access preamble may be determined or generated according to the logical root sequence index. Since the logical root sequence indices of terminal devices with different device types are different, the corresponding random access preambles are also different.

For the common device, the logical root sequence index can be obtained directly according to the high layer parameter prach-RootSequenceIndex (or rootSequenceIndex-BFR), that is, the start index of the first logical root sequence of the common device.

The number of preambles of the common device is fixed to be 64. After the start index of the first logical root sequence is obtained, according to the start index of the first logical root sequence, the preamble is determined or generated by increasing the cyclic shift, first; and then, the preamble is determined or generated by increasing the start index, until the number of determined or generated preambles reaches 64. The determined or generated 64 preambles are the second preamble of the common device. For a specific manner of determining or generating the second preamble, please refer to the description of the above embodiments.

The same is true for reduced capability device: first, the start index of the second logical root sequence of the reduced capability device is obtained; then, according to the start index of the second logical root sequence, the first Ncs value and the number of the first preamble of the reduced capability device, the second logical root sequence index is obtained, and the first preamble is determined or generated; optionally, the first preamble is available to the reduced capability device.

The number of the second preamble is 64, optionally, the number of the first preamble may be equal to the number of the second preamble, that is, the number of the first preamble is also 64; the number of the first preamble may also be less than the number of the second preamble, that is, the number of the first preamble is less than 64; and the number of the first preamble may also be greater than the number of the second preamble, that is, the number of the first preamble is greater than 64.

According to the start index of the second logical root sequence, the preamble is determined or generated by increasing the cyclic shift, first; and then, the preamble is determined or generated by increasing the start index, until the number of determined or generated preambles meets the requirement. That is, the first preamble of the reduced capability device is obtained.

In the above embodiments, how to obtain the corresponding preamble is explained for terminal devices with different device types, involving the obtaining of the second preamble of the common device, and the obtaining of the first preamble of the reduced capability device. After the corresponding preamble is obtained, the corresponding random access preamble can be obtained.

Optionally, in the case that the terminal device is the common device, the corresponding random access preamble is one of the second preamble; and in the case that the terminal device is the reduced capability device, the corresponding random access preamble is one of the first preambles.

The second preambles may include the preambles for contention-based random access of the common device, the preambles for non-contention based random access of the common device, and the preambles for random access for other purposes of the common device. Optionally, the preambles for random access for other purposes may include, for example, the preambles used for SI request. Similarly, the first preambles may include the preambles for contention-based random access of the reduced capability device, the preambles for non-contention based random access of the reduced capability device, or the preambles for random access for other purposes of the reduced capability device. Optionally, the preambles for random access for other purposes may include, for example, the preambles used for SI request.

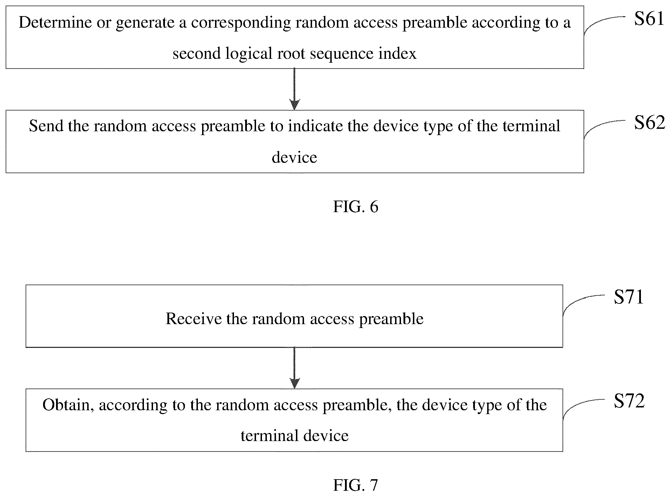

FIG. 6 is a schematic flowchart of an indication method according to an embodiment of the present application, as shown in FIG. 6, the method is applied to the terminal device, and including:

S61, determine or generate a corresponding random access preamble according to a second logical root sequence index; and

S62, send the random access preamble to indicate a device type of the terminal device.

Optionally, the device type includes at least one of the following: a reduced capability device and a common device.

Optionally, a method for determining or generating the second logical root sequence index includes: obtaining, according to the device type, the second logical root sequence index.

Optionally, the device type is a reduced capability device, and the obtaining, according to the device type, the second logical root sequence index includes:

obtaining a first parameter, a first logical root sequence index, and the number of the first preamble of the reduced capability device;

determining, according to the first parameter, a cyclic shift step value of the reduced capability device; and

obtaining the second logical root sequence index according to the cyclic shift step value of the reduced capability device, the first logical root sequence index and the number of the first preamble.

Optionally, the first logical root sequence index is available to a common terminal device; and the second logical root sequence index is available to a reduced capability terminal device.

Optionally, the determining, according to the first parameter, the cyclic shift step value of the reduced capability device includes:

determining, according to the first parameter, a cyclic shift parameter of the reduced capability device; and determining, according to the cyclic shift parameter of the reduced capability device, the cyclic shift step value of the reduced capability device.

Optionally, a solution for determining the cyclic shift parameter of the reduced capability device is as follows:

$$D = \begin{cases} x \bmod 8 + 8 & RSRP \le TH1, \ x \ne 0 \\ x & RSRP > TH1 \end{cases}$$

where the 'D' is the cyclic shift parameter of the reduced capability device, the 'x' is the first parameter configured by the high layer, the 'RSRP' is reference signal received power of the reduced capability device, and the 'TH1' is a preset threshold.

Optionally, a solution for determining the cyclic shift parameter of the reduced capability device is as follows:

$$D = \begin{cases} (x+y) \bmod 8 + 8 & RSRP \le TH1, (x+y) \ne 0 \\ (x+y) & RSRP > TH1 \end{cases}$$

where the 'D' is the cyclic shift parameter of the reduced capability device, the 'x' is the first parameter, the 'y' is the cyclic shift parameter of the common device, the 'RSRP' is reference signal received power of the reduced capability device, and the 'TH1' is a preset threshold.

Optionally, the first parameter includes at least one of the following:

a first preset value;
a parameter configured by a high layer;
a parameter configured by radio resource control signaling; and
a parameter configured by a system message.

Since in the process of generating the preamble, the cyclic shift value $C_v$ is used to generate the cyclic shift sequence, and the value of the cyclic shift value $C_v$ is related to the value of Ncs, the determined or generated preambles are also different in the case that the Ncs values are different.

In this embodiment of the present application, for the reduced capability device, the value of Ncs is different from that of the common device, and the second logical root sequence index of the reduced capability device is also different from the first logical root sequence index of the common device, therefore, the preamble of the reduced capability device is also different from the preamble of the common device.

The reduced capability device determines the first Ncs value of the reduced capability device through the first parameter. Optionally, the reduced capability device may determine the cyclic shift parameter of the reduced capability device according to the first parameter, and then determine the first Ncs value of the reduced capability device according to the cyclic shift parameter of the reduced capability device.

A solution for determining the cyclic shift parameter of the reduced capability device is as follows:

$$D = \begin{cases} x \bmod 8 + 8 & RSRP \le TH1, \ x \ne 0 \\ x & RSRP > TH1 \end{cases}$$

Optionally, the 'D' is the cyclic shift parameter of the reduced capability device, the 'x' is the first parameter configured by the high layer, the 'RSRP' is reference signal received power of the reduced capability device, and the 'TH1' is a preset threshold.

A solution for determining the cyclic shift parameter of the reduced capability device is as follows:

$$D = \begin{cases} (x + y)\bmod 8 + 8 & \text{RSRP} \le \text{TH1} \,, (x + y) \ne 0 \\ (x + y) & \text{RSRP} > \text{TH1} \end{cases}$$

Optionally, the 'D' is the cyclic shift parameter of the reduced capability device, the 'x' is the first parameter, the 'y' is the cyclic shift parameter of the common device, the 'RSRP' is reference signal received power of the reduced capability device, and the 'TH1' is a preset threshold.

Optionally, the first parameter may be the first preset value, the parameter configured by the high layer, the parameter configured by the RRC signaling, or the parameter configured by the system message.

In the above implementations, the cyclic shift parameter of the reduced capability device is different from the cyclic shift parameter of the common device. In the case that different types of terminal devices use the same root sequence, different types of terminal devices adopt different cyclic shift parameters, which can avoid conflicts. In addition, different types of terminal devices use different cyclic shift parameters and different root sequences to generate preambles, which is more beneficial for the network device to quickly identify the device type of the terminal device.

Optionally, based on different reference signal received powers of the reduced capability device, the cyclic shift parameters are calculated in different ways. In the embodiments of the present application, by setting the preset threshold TH1, in the case that RSRP is less than or equal to the preset threshold TH1, the value of D is greater than or equal to 8, so that the cyclic shift parameter of the reduced capability device located at the edge of the cell is larger, and then the base station can better identify the edge reduced capability device.

By limiting the value of the available Ncs by the RSRP, it can ensure that the network device can better identify the preamble of the terminal device at the edge of the cell, thereby avoiding the conflict between the preamble of the terminal device at the edge of the cell and other terminal devices.

After obtaining the cyclic shift parameter D of the reduced capability device, the first Ncs value of the reduced capability device may be obtained by looking up a table.

Optionally, the obtaining the second logical root sequence index according to the cyclic shift step value of the reduced capability device, the first logical root sequence index and the number of the first preamble includes:
obtaining the second logical root sequence index according to the cyclic shift step value of the reduced capability device, a last index of the first logical root sequence and the number of the first preamble.

Optionally, the first logical root sequence index and the second logical root sequence index are numerically consecutive.

Optionally, the obtaining the second logical root sequence index according to the cyclic shift step value of the reduced capability device, the first logical root sequence index and the number of the first preamble includes:

obtaining the second parameter; and

obtaining the second logical root sequence index according to the second parameter, the cyclic shift step value of the reduced capability device, the first logical root sequence index and the number of the first preamble.

In the process of generating the first preamble by the reduced capability device according to the second logical root sequence index, since values of the first parameters are different, the values of cyclic shift parameters of the reduced capability device will be affected, thereby affecting the first Ncs value of the reduced capability device. Therefore, the number of index values included in the second logical root sequence index is determined by both the first parameters and the number of the first preamble.

For example, in the case that two root sequence indexes are required for generating 64 preambles of the common device, that is, the first logical root sequence index of the common device is: prach-RootSequenceIndex (or rootSequenceIndex-BFR)+{0,1}, that is, {prach -RootSequenceIndex, prach-RootSequenceIndex+1} or {rootSequenceIndex-BFR, rootSequenceIndex-BFR+1}; and in the case that two logical indexes are required for the reduced capability device to generate the number of preambles that satisfies the number of the first preamble, according to the first Ncs value determined by the first parameter, the second logical root sequence index of the reduced capability device is: {prach-RootSequenceIndex+2, prach-RootSequenceIndex+3} or {rootSequenceIndex-BFR+2, rootSequenceIndex-BFR+3}. prach-RootSequenceIndex+1, and prach-RootSequenceIndex+2, or, rootSequenceIndex-BFR+1, and rootSequenceIndex-BFR+2 are numerically consecutive. the logical root sequence index of the common device and the logical root sequence index of the reduced capability device in this implementation are consecutive, which can ensure that the preamble selected by the reduced capability device has a good correlation.

In a possible implementation, the second parameter may be obtained first, and then the second logical root sequence index may be obtained according to the second parameter, the cyclic shift step value of the reduced capability device, the first logical root sequence index, and the number of the first preamble.

Let the second parameter be preamble_root_offset, and the first logical root sequence index of the common device is prach-RootSequenceIndex (or rootSequenceIndex-BFR), the start index of the second logical root sequence can be obtained, according to the parameters preamble_root_offset and prach-RootSequenceIndex (or rootSequenceIndex-BFR), that is, prach-RootSequenceIndex (or rootSequenceIndex-BFR)+preamble_root_offset.

In a possible implementation, the start index of the second logical root sequence may be the sum of the second parameter and the start indexes of the first logical root sequence. For example, when the second parameter preamble_root_offset=3, the start index of the second logical root sequence is prach-RootSequenceIndex (or rootSequenceIndex-BFR)+3; when the second parameter preamble_root_offset=4, the start index of the second logical root sequence is prach-RootSequenceIndex (or rootSequenceIndex-BFR)+4, etc. After the start index of the second logical root sequence is obtained, the second logical root sequence index can be obtained by combining the first Ncs value and the number of the first preamble.

Optionally, the second parameter includes at least one of the following:

a second preset value;
a parameter configured by the radio resource control signaling; and
a parameter configured by the system message.

In the above embodiment, a method, for obtaining the start index of the second logical root sequence through the second parameter, the cyclic shift step value of the reduced capability device and the first logical root sequence index, is introduced, where the start index of the second logical root sequence is the sum of the second parameter and the start indexes of the first logical root sequence. There are also multiple possible implementations for obtaining the second parameter.

In an implementation, the second parameter may be a second preset value, for example, it may be a fixed value agreed between the base station and the UE. For example, when the second parameter is a preset value of 3, the start index of the second logical root sequence may be: the start index of the first logical root sequence plus 3.

In an implementation, the second parameter preamble_root_offset can also be used as the high layer parameter, which is dynamically configured by the network device for the reduced capability device with different channel conditions. For example, when the high layer configuration preamble_root_offset=7, the start index of the second logical root sequence is prach-RootSequenceIndex (or rootSequenceIndex-BFR)+preamble_root_offset (=7).

In the case that the second parameter is the high layer parameter, optionally, the second parameter may be a parameter configured by the radio resource control signaling, and the network device may send RRC signaling which includes the second parameter to the terminal device. The terminal device receives the RRC signaling, obtains the second parameter. Furthermore, it obtains the start index of the second logical root sequence according to both the second parameter and the first logical root sequence. Optionally, the second parameter may also be a parameter configured by a MIB (Master Information Block, master information block)/SIB (System Information Blocks, system information block), the terminal device obtains the second parameter by obtaining the MIB/SIB, and obtains the start index of the second logical root sequence according to both the second parameter and the first logical root sequence.

Optionally, it further includes at least one of the following:

the number of the first preamble is equal to the number of a second preamble;
the number of the first preamble is less than the number of the second preamble; and
the number of the first preamble is greater than the number of the second preamble.

Optionally, the second preamble is available to the common terminal device.

The number of the second preamble is 64, optionally, the number of the first preamble may be equal to the number of the second preamble, that is, the number of the first preamble is also 64; the number of the first preamble may also be less than the number of the second preamble, that is, the number of the first preamble is less than 64; and the number of the first preamble may also be greater than the number of the second preamble, that is, the number of the first preamble is greater than 64.

According to the start index of the second logical root sequence, the preamble is determined or generated by increasing the cyclic shift, first; and then, the preamble is determined or generated by increasing the start index, until the number of determined or generated preambles meets the requirement. That is, the first preamble of the reduced capability device is obtained.

Optionally, the first preamble is used for at least one of the following:

the preamble for contention-based random access;
the preamble for non-contention based random access; and
the preamble for random access for other purposes.

The second preamble may include the preamble for contention-based random access of the common device, the preamble for non-contention based random access of the common device, and the preamble for random access for other purposes of the common device. Optionally, the preamble for random access for other purposes may include, for example, a preamble used for SI request. Similarly, the first preamble may include the preamble for contention-based random access of the reduced capability device, the preamble for non-contention based random access of the reduced capability device, or the preamble for random access for other purposes of the reduced capability device. Optionally, the preamble for random access for other purposes may include, for example, the preamble used for SI request.

FIG. 7 is a schematic flowchart of an indication method according to an embodiment of the present application. As shown in FIG. 7, the method is applied to the network device, and including:

S71, receive a random access preamble; and
S72, obtain, according to the random access preamble, a device type of a terminal device.

In this embodiment of the present application, the device type of the terminal device may be a reduced capability device or a common device. For terminal devices with different device types, the corresponding random access preambles are different.

For example, for the common device, at a random access occasion, the preamble for random access is one of the 64 preambles, which are determined or generated by way of cyclic shift increment according to the logical root sequence index. For the reduced capability device, there are also corresponding preambles; and at a random access occasion, the random access preamble corresponding to the reduced capability device is also one of the corresponding preambles.

The preamble corresponding to the reduced capability device is different from the preamble corresponding to the common device, so that the corresponding random access preambles determined or generated for different device types are also different.

The network device receives the random access preamble, and then may obtain the device type of the terminal device according to the random access preamble.

For the common device, the preamble is determined or generated by way of cyclic shift increment according to the logical root sequence index, and the logical root sequence index is indicated by the high-layer parameter. Therefore, in the case that the random access preamble received by the network device is one of these preambles, it indicates that the corresponding terminal device is a common device; otherwise, it indicates that the corresponding terminal device is a reduced capability device.

Optionally, the device type includes at least one of the following: a reduced capability device and a common device.

Optionally, the determining or generating the device type of the terminal device according to the starting index of the logical root sequence includes:

in the case that the random access preamble corresponds to a first logical root sequence index, the device type is a common device; and
optionally, the second logical root sequence index is determined or generated according to a first parameter, the first logical root sequence index and the number of a first preamble of the reduced capability device.

The preamble sequence of the common device is obtained according to the first logical root sequence index, while the preamble sequence of the reduced capability device is obtained according to the second logical root sequence index. Since the first logical root sequence index and the second logical root sequence index are different, the preamble sequence of the common device and the preamble sequence of the reduced capability device are different. After generating the corresponding preamble sequence, the terminal device sends the preamble sequence to the network device. The network device side can learn the available preamble sequence pool for the common device or for the reduced capability device in advance based on the service state.

During random access, the common device will select one of the corresponding preambles as the random access preamble to perform the random access process, and the reduced capability device will do the same. Since for the common device and the reduced capability device, their preambles are different, during the random access, their random access preambles are also different. The network device can learn the device type of the terminal device according to the random access preamble. In the case that the random access preamble corresponds to the first logical root sequence, the terminal device is a common device; and/or, in the case that the random access preamble corresponds to the second logical root sequence, the terminal device is a reduced capability device.

Optionally, the device type is the reduced capability device; and the second logical root sequence index is determined or generated according to a cyclic shift step value of the reduced capability device, a last index of the first logical root sequence and the number of the first preamble.

Optionally, the cyclic shift step value of the reduced capability device is indicated by a cyclic shift parameter of the reduced capability device, and the first logical root sequence index and the second logical root sequence index are numerically consecutive.

Optionally, the device type is the reduced capability device; and

the second logical root sequence index is determined or generated according to the cyclic shift step value of the reduced capability device, a second parameter, the first logical root sequence index and the number of the first preamble.

Optionally, the cyclic shift step value of the reduced capability device is indicated by the cyclic shift parameter of the reduced capability device.

Optionally,

$$D = \begin{cases} x \bmod 8 + 8 & \text{RSRP} \le \text{TH1}, \quad x \ne 0 \\ x & \text{RSRP} > \text{TH1} \end{cases}$$

The 'D' is the cyclic shift parameter of the reduced capability device, the 'x' is the first parameter configured by a high layer, the 'RSRP' is reference signal received power of the reduced capability device, and the 'TH1' is a preset threshold.

Optionally,

$$D = \begin{cases} (x + y) \bmod 8 + 8 & \text{RSRP} \le \text{TH1}, (x + y) \ne 0 \\ (x + y) & \text{RSRP} > \text{TH1} \end{cases}$$

Optionally, the 'D' is the cyclic shift parameter of the reduced capability device, the 'x' is the first parameter, the 'y' is the cyclic shift parameter of the common device, the 'RSRP' is reference signal received power of the reduced capability device, and the 'TH1' is a preset threshold.

Optionally, the first parameter includes at least one of the following:

a first preset value;
a parameter configured by a high layer;
a parameter configured by radio resource control signaling; and
a parameter configured by a system message. Since in the process of generating the preamble, the cyclic shift value $C_v$ is used to generate the cyclic shift sequence, and the value of the cyclic shift value $C_v$ is related to the Ncs value, the determined or generated preambles are also different in the case the Ncs values are different.

For the common device, its Ncs value is indicated by the cyclic shift parameter. In the case the cyclic shift parameter zeroCorrelationZoneConfig is configured by the high layer, the value of Ncs can be obtained according to Table 6.3.3.1-5. The number of the second preamble of the common devices is also fixed to be 64.

In the embodiments of the present application, for the reduced capability device, the value of the Ncs is different from that of the common device, and the second logical root sequence index of the reduced capability device is also different from the first logical root sequence index of the common device, therefor, the preamble of the reduced capability device is also different from that of the common device.

The reduced capability device determines the first Ncs value of the reduced capability device through the first parameter. Optionally, the reduced capability device may determine the cyclic shift parameter of the reduced capability device according to the first parameter, and then determine the first Ncs value of the reduced capability device according to the cyclic shift parameter of the reduced capability device.

A solution for determining the cyclic shift parameter of the reduced capability device is as follows:

$$D = \begin{cases} x \bmod 8 + 8 & \text{RSRP} \le \text{TH1}, \quad x \ne 0 \\ x & \text{RSRP} > \text{TH1} \end{cases}$$

The 'D' is the cyclic shift parameter of the reduced capability device, the 'x' is the first parameter configured by a high layer, the 'RSRP' is reference signal received power of the reduced capability device, and the 'TH1' is a preset threshold.

A solution for determining the cyclic shift parameter of the reduced capability device is as follows:

$$D = \begin{cases} (x + y) \bmod 8 + 8 & \text{RSRP} \leq \text{TH1} , (x + y) \neq 0 \\ (x + y) & \text{RSRP} > \text{TH1} \end{cases}$$

The 'D' is the cyclic shift parameter of the reduced capability device, the 'x' is the first parameter, the 'y' is the cyclic shift parameter of the common device, the 'RSRP' is reference signal received power of the reduced capability device, and the 'TH1' is a preset threshold.

Optionally, the first parameter may be the first preset value, or the parameter configured by the high layer, or the parameter configured by the RRC signaling, or the parameter configured by the system message.

In the above embodiments, the cyclic shift parameter of the reduced capability device is different from that of the common device. In the case that different types of terminal device use the same root sequence, different types of terminal devices adopt different cyclic shift parameters to avoid conflicts. In addition, different types of terminal devices use different cyclic shift parameters and different root sequences to generate preambles, which is more beneficial for the network device to quickly identify the device type of the terminal device.

Optionally, based on different reference signal received powers of the reduced capability device, the cyclic shift parameters are calculated in different ways. In the embodiments of the present application, by setting the preset threshold TH1, in the case that RSRP is less than or equal to the preset threshold TH1, the value of D is greater than or equal to 8, so that the cyclic shift parameter of the reduced capability device located at the edge of the cell is larger, and then the base station can better identify the edge reduced capability device.

By limiting the value of the available Ncs by the RSRP, it can ensure that the network device can better identify the preamble of the terminal device at the edge of the cell, thereby avoiding the conflict between the preamble of the terminal device at the edge of the cell and other terminal devices.

After obtaining the cyclic shift parameter D of the reduced capability device, the first Ncs value of the reduced capability device may be obtained by looking up a table.

In the process of generating the first preamble by the reduced capability device according to the second logical root sequence index, since values of the first parameters are different, the values of cyclic shift parameters of the reduced capability device will be affected, thereby affecting the first Ncs value of the reduced capability device. Therefore, the number of index values included in the second logical root sequence index is determined by both the first parameters and the number of the first preamble.

For example, in the case that two root sequence indexes are required for generating 64 preambles of the common device, that is, the first logical root sequence index of the common device is: prach-RootSequenceIndex (or rootSequenceIndex-BFR)+{0,1}, that is, {prach -RootSequenceIndex, prach-RootSequenceIndex+1} or {rootSequenceIndex-BFR, rootSequenceIndex-BFR+1}; and in the case that two logical indexes are required for the reduced capability device to generate the number of preambles that satisfies the number of the first preamble, according to the first Ncs value determined by the first parameter, the second logical root sequence index of the reduced capability device is: {prach-RootSequenceIndex+2, prach- RootSequenceIndex + 3 } or {rootSequenceIndex-BFR+2, rootSequenceIndex - BFR + 3 }, prach-RootSequenceIndex+1, prach-RootSequenceIndex+2, or, rootSequenceIndex-BFR+1, rootSequenceIndex-BFR+2 are numerically consecutive. In this implementation, the logical root sequence index of the common device and the logical root sequence index of the reduced capability device are consecutive, which can ensure that the preamble selected by the reduced capability device has a good correlation.

In a possible implementation, the second parameter may be obtained first, and then the second logical root sequence index may be obtained according to the second parameter, the first Ncs value, the first logical root sequence index, and the number of the first preamble.

Let the second parameter be preamble_root_offset, and the first logical root sequence index of the common device is prach-RootSequenceIndex (or rootSequenceIndex-BFR), the start index of the second logical root sequence can be obtained, according to the parameters preamble_root_offset and prach-RootSequenceIndex (or rootSequenceIndex-BFR), that is, prach-RootSequenceIndex (or rootSequenceIndex-BFR)+preamble_root_offset.

In a possible implementation, the start index of the second logical root sequence may be the sum of the second parameter and the start indexes of the first logical root sequence. For example, when the second parameter preamble_root_offset=3, the start index of the second logical root sequence is prach-RootSequenceIndex (or rootSequenceIndex-BFR)+3; when the second parameter preamble_root_offset=4, the start index of the second logical root sequence is prach-RootSequenceIndex (or rootSequenceIndex-BFR)+4, etc. After the start index of the second logical root sequence is obtained, the second logical root sequence index can be obtained by combining the first Ncs value and the number of the first preamble.

Optionally, the second parameter includes at least one of the following:

a second preset value;
a parameter configured by radio resource control signaling; and

a parameter configured by a system message.

In a possible implementation, the second parameter may be a preset value, for example, it may be a fixed value agreed between the base station and the UE. For example, when the second parameter is the preset value of 3, the start index of the second logical root sequence may be: the start index of the first logical root sequence plus 3.

In an implementation, the second parameter preamble_root_offset can also be used as the high layer parameter, which is dynamically configured by the network device for the reduced capability device with different channel conditions. For example, when the high layer configuration preamble_root_offset=7, and the first logical root sequence index required to generate 64 preamble sequences of the common device is prach-RootSequenceIndex (or rootSequenceIndex-BFR)+{0,1}, the start index of the second logical root sequence is prach-RootSequenceIndex (or rootSequenceIndex-BFR)+preamble_root_offset (=7).

In the case that the second parameter is the high layer parameter, optionally, the second parameter may be configured by RRC signaling, and the network device may send RRC signaling to the terminal device, where the RRC signaling includes the second parameter. The terminal device receives the RRC signaling, obtains the second parameter, and obtains the start index of the second logical root sequence according to the second parameter, the first Ncs value and the first logical root sequence. Optionally, the second parameter may also be a parameter configured by a MIB/SIB, and the terminal device obtains the second parameter by obtaining the MIB/SIB, and then obtains the start index of the second logical root sequence according to the second parameter, the first Ncs value and the first logical root sequence.

Optionally, it further includes at least one of the following:

the number of the first preamble is equal to the number of a second preamble;
the number of the first preamble is less than the number of the second preamble; and
the number of the first preamble is greater than the number of the second preamble.

Optionally, the first preamble is available to the reduced capability terminal and the second preamble is available to the common terminal device.

The number of the second preamble is 64, optionally, the number of the first preamble may be equal to the number of the second preamble, that is, the number of the first preamble is also 64; the number of the first preamble may also be less than the number of the second preamble, that is, the number of the first preamble is less than 64; and the number of the first preamble may also be greater than the number of the second preamble, that is, the number of the first preamble is greater than 64.

According to the start index of the second logical root sequence, the preamble is determined or generated by increasing the cyclic shift, first; and then, the preamble is determined or generated by increasing the start index, until the number of determined or generated preambles meets the requirement. That is, the first preamble of the reduced capability device is obtained.

Since the number of the first preamble may be equal to 64, greater than 64 or less than 64, in the case of different numbers of first preambles, the number of index values included in the second logical root sequence index may be different.

Optionally, the first preamble is used for at least one of the following:

a preamble for contention-based random access;
a preamble for non-contention based random access; and
a preamble for random access for other purposes.

The second preamble may include the preamble for contention-based random access of the common device, the preamble for non-contention based random access of the common device, and the preamble for random access for other purposes of the common device. Optionally, the preamble for random access for other purposes may include, for example, a preamble used for SI request. Similarly, the first preamble may include the preamble for contention-based random access of the reduced capability device, the preamble for non-contention based random access of the reduced capability device, or the preamble for random access for other purposes of the reduced capability device. Optionally, the preamble for random access for other purposes may include, for example, the preamble used for SI request.

Implementations of the methods illustrated in FIG. 6 and FIG. 7 are similar to the method embodiments illustrated in FIG. 1 to FIG. 5 above. For details, please refer to the method embodiments illustrated in FIG. 1 to FIG. 5, which will not be repeated herein.

The solution of the present application will be described below with specific examples.

Assuming that the high-layer parameter prach-ConfigurationIndex=2, the preamble format Preamble format=0 may be obtained by looking up the table Table 6.3.3.2-2 (38.211). According to the preamble format being 0, $\Delta f_{RA}$ =1.25 kHz can be obtained from Table 6.3.3.1-1 (38.211). For the common device, assuming that the cyclic shift parameter zeroCorrelationZoneConfig=6, $N_{CS}$ = 32 can be obtained by looking up Table 6.3.3.1-5.

According to the above parameters and the following formula, the cyclic shift value $C_v$ can be obtained:

$$C_v = \begin{cases} vN_{CS} & v=0,1,...,\lfloor L_{RA}/N_{CS} \rfloor -1, N_{CS} \neq 0 & \text{for unrestricted sets} \\ 0 & N_{CS} = 0 & \text{for unrestricted sets} \\ d_{start}\lfloor v/n_{shift}^{RA} \rfloor + (v \bmod n_{shift}^{RA})N_{CS} & v=0,1,...,w-1 & \text{for restricted sets typeA and B} \\ \overline{d}_{start} + (v-w)N_{CS} & v=w,...,w+\overline{n}_{shift}^{RA}-1 & \text{for restricted sets typeB} \\ \overline{\overline{d}}_{start} + \left(v-w-\overline{n}_{shift}^{RA}\right)N_{CS} & v=w+\overline{n}_{shift}^{RA},...,w+\overline{n}_{shift}^{RA}+\overline{\overline{n}}_{shift}^{RA}-1 & \text{for restricted sets typeB} \end{cases} \quad (3)$$

Optionally, $w = n_{shift}^{RA} n_{group}^{RA} + \overline{n}_{shift}^{RA}$.

Let prach-RootSequenceIndex=439, the physical root sequence number u: Sequence number u=662 can be obtained from Table 6.3.3.1-3.

Then, according to u and $C_v$, combining with formula (1) and formula (2), 64 preambles corresponding to the common device can be generated, so that it can be learnt that the logical root sequence indexes required by the common device to generate 64 preambles are {439, 440, 441}. The {439, 440, 441} is the first logical root sequence index, 439 is the start index of the first logical root sequence, and 441 is the last index of the first logical root sequence.

For the reduced capability device, the cyclic shift value is different from that of the common device. In one embodiment, first, the cyclic shift parameter of the reduced capability device is obtained, according to the first parameter x and the RSRP of the reduced capability device.

Optionally, when RSRP is greater than TH1, the cyclic shift parameter D of the reduced capability device is: D=x; and when RSRP is less than or equal to TH1, the cyclic shift parameter D of the reduced capability device is: D=xmod8+8.

In another embodiment, the cyclic shift parameter of the reduced capability device may also be obtained according to the first parameter x, the cyclic shift parameter y of the common device, and the RSRP of the reduced capability device. Optionally, y=6 (that is, zeroCorrelationZoneConfig in the above embodiment).

Then, when RSRP is greater than TH1, the cyclic shift parameter D of the reduced capability device is: D=x+y=x+6; and when RSRP is less than or equal to TH1, the cyclic shift parameter D of the reduced capability device is: D=(x+y)mod8+8=(x+6)mod8+8.

After the cyclic shift parameter D of the reduced capability device is calculated, the first Ncs value may be obtained by looking up a table according to D, and the second logical root sequence index may be obtained according to the first Ncs value, the first logical root sequence index and the number of the first preamble.

In one embodiment, taking the second parameter as a preset value, that is, the fixed value agreed between the UE and the base station, and the start index of the second logical root sequence is the sum of the second parameter and the start indexes of the first logical root sequence. For example, the second parameter is preamble_root_offset=5, and the number of preambles corresponding to the reduced capability device is also 64, the start index of the second logical root sequence is 439+5, and the logical root sequence index required for the reduced capability device to generate 64 preambles based on the first Ncs value is {439+5, 445, 446}.

In one embodiment, the first logical root sequence index and the second logical root sequence index are numerically consecutive, and the number of random access preambles corresponding to the reduced capability device is also 64, the start index of the second logical root sequence is 441+1, and the logical root sequence index required by the reduced capability device to generate 64 preambles based on the first Ncs value is {441+1, 443, 444}.

In the above examples, it is assumed in all cases that the number of logical root indexes, required to generate the number of preambles that equals to the number of the first preamble or the number of the second preamble, is 3, in the case that the number of logical root indexes, required to generate the number of preambles that equals to the number of the first preamble or the number of the second preamble, can be any value other than 3, the logical root sequence index required by the reduced capability device may be determined according to the specific number of logical root indexes required, in combination with the method according to the above embodiments. For example, if the number of the first preamble and the number of the second preamble are both 64, the number of logical root sequence indexes required to generate 64 preambles of the common device is 2, and the start index is 439, the logical root sequence index required to generate 64 preambles by the common device is {439,440}. Upon this, in the case that the number of logical root sequence indexes required to generate 64 preambles of the reduced capability device based on the first Ncs value is 2, and preamble_root_offset=5, the logical root sequence index required for the reduced capability device to generate 64 preambles is {439+5, 445}.

In one embodiment, the second parameter is configured by RRC signaling or MIB/SIB, for example, the second parameter is preamble_root_offset=7, and the number of preambles corresponding to the reduced capability device is also 64, the start index of the second logical root sequence is 439+7, and the logical root sequence index required for the reduced capability device to generate 64 preambles based on the first Ncs value is {439+7, 447, 448}.

In one embodiment, the second parameter is configured by RRC signaling or MIB/SIB, for example, the second parameter is preamble_root_offset=7, and the number of preambles corresponding to reduced capability device is 32, the start index of the second logical root sequence is 439+7. In the case that two logical root sequence indexes are required to generate 32 preambles based on the first Ncs value, the logical root sequence indexes required for the reduced capability device to generate the 32 preambles are {439+7, 447}.

In one embodiment, the second parameter is configured by RRC signaling or MIB/SIB, for example, the second parameter is preamble_root_offset=7, the number of preambles corresponding to the reduced capability device is 96, and the start index of the second logical root sequence is 439+7. In the case that four logical root sequence indexes are required to generate 96 preambles based on the first Ncs value, the logical root sequence index required by the reduced capability device to generate the 96 preambles is {439+7, 447, 448, 449}.

It can be learnt from the above embodiments that the preamble of the reduced capability device can be generated according to the logical root sequence of the reduced capability device. Therefore, the random access preambles used by the reduced capability device and the common device for random access are different, so that the device type (a reduced capability device or a normal device) of the terminal device can be obtained according to the random access preamble used during random access.

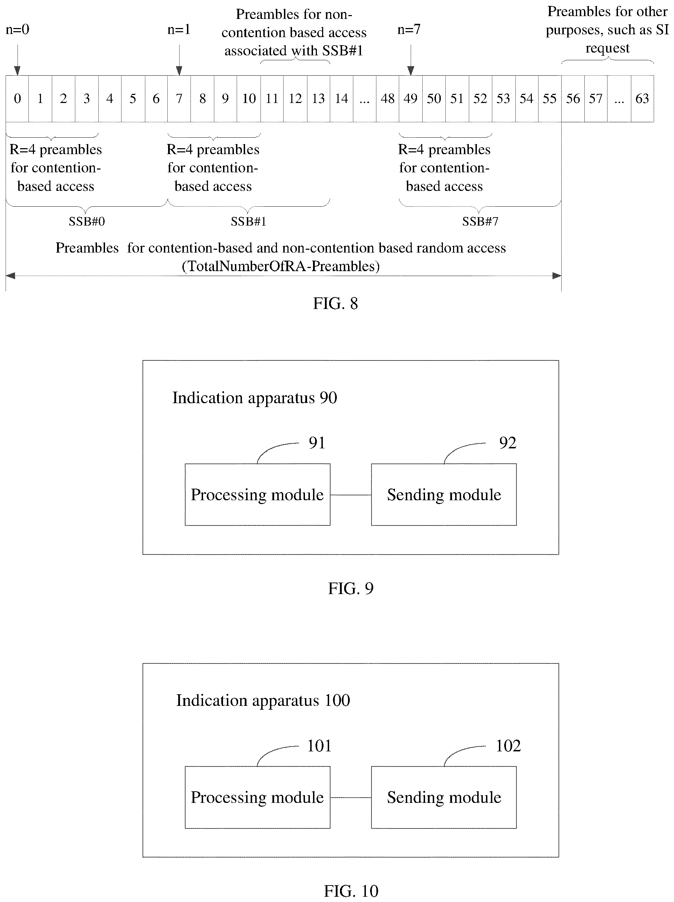

In one embodiment, the function of L preambles of the reduced capability device is the same as that of the preambles of the common device. FIG. 8 is a schematic diagram of multiple random access preambles according to an embodiment of the present application. As shown in FIG. 8, optionally, the number of preambles of the reduced capability device is L=64, totalNumberOfRA-Preambles=56, and CB- PreamblesPerSSB=4. Then on each RO, the start index of 4 consecutive contention-based preambles corresponding to SSB n ( $0 \le n \le N - 1$ ) associated with the RO is 7n. The function of the preamble of the reduced capability device is the same as that of the preamble of the common device, and both of them may include the preamble for contention-based random access, the preamble for non-contention-based random access, the preamble for other purpose-based random access, etc.

In the indication method provided by the embodiment of the present application, first, the terminal device determines or generates the corresponding random access preamble according to its device type, and then sends the random access preamble. After the network device receives the random access preamble, since the random access preamble is determined or generated according to the device type of the terminal device, the network device can obtain the device type of the terminal device according to the random access preamble. In the solutions provided by the embodiments of the present application, since the random access preambles determined or generated by different device types are different, the identification of the device type can be realized on the basis of keeping the number of preambles of the common device unchanged. Optionally, the preamble of the reduced capability device is associated with the SSB, which keeps the same beamforming characteristics as the common device; and a fixed mapping relationship exists between the logical root sequence of the reduced capability device and the logical root sequence of the common device, without adding a new logical root sequence indication, which reduces the overhead of high layer signaling.

FIG. 9 is schematic structural diagram I of an indication apparatus according to an embodiment of the present application. As shown in FIG. 9, the indication apparatus 90 includes:

> a processing module 91, configured to determine or generate a corresponding random access preamble according to a device type of the terminal device; and
> a sending module 92, configured to send the random access preamble to indicate the device type.

Optionally, the device type includes at least one of the following: a reduced capability device and a common device.

Optionally, the processing module 91 is specifically configured to:

> obtain a corresponding logical root sequence index according to the device type; and
> determine or generate the random access preamble according to the logical root sequence index.

Optionally, the device type is the reduced capability device, and the processing module 91 is specifically configured to:

> obtain a first parameter, a first logical root sequence index, and the number of a first preamble of the reduced capability device;
> determine, according to the first parameter, a cyclic shift step value of the reduced capability device; and

obtain a second logical root sequence index according to the cyclic shift step value of the reduced capability device, the first logical root sequence index and the number of the first preamble. Optionally, the first logical root sequence index is available to the common device; and the second logical root sequence index is available to the reduced capability device.

Optionally, the processing module 91 is specifically configured to:

determine, according to the first parameter, a cyclic shift parameter of the reduced capability device; and
determine, according to the cyclic shift parameter of the reduced capability device, the cyclic shift step value of the reduced capability device.

Optionally, including:

$$D = \begin{cases} x \bmod 8 + 8 & RSRP \leq TH1, \ x \neq 0 \\ x & RSRP > TH1 \end{cases}$$

The 'D' is the cyclic shift parameter of the reduced capability device, the 'x' is the first parameter configured by a high layer, the 'RSRP' is reference signal received power of the reduced capability device, and the 'TH1' is a preset threshold.

Optionally, including:

$$D = \begin{cases} (x + y) \bmod 8 + 8 & RSRP \leq TH1, (x + y) \neq 0 \\ (x + y) & RSRP > TH1 \end{cases}$$

The 'D' is the cyclic shift parameter of the reduced capability device, the 'x' is the first parameter, the 'y' is the cyclic shift parameter of the common device, the 'RSRP' is reference signal received power of the reduced capability device, and the 'TH1' is a preset threshold.

Optionally, the first parameter includes at least one of the following:

a first preset value;
a parameter configured by a high layer;
a parameter configured by radio resource control signaling; and
a parameter configured by a system message.

Optionally, the processing module 91 is specifically configured to:
obtain the second logical root sequence index according to the cyclic shift step value of the reduced capability device, a last index of the first logical root sequence and the number of the first preamble.

Optionally, the first logical root sequence index and the second logical root sequence index are numerically consecutive.

Optionally, the processing module 91 is specifically configured to:

obtain a second parameter; and
obtain, according to the second parameter, the cyclic shift step value of the reduced capability device, the first logical root sequence index and the number of the first preamble, the second logical root sequence index.

Optionally, the second parameter includes at least one of the following:

a second preset value;
a parameter configured by radio resource control signaling; and
a parameter configured by a system message.

Optionally, it further includes at least one of the following:

the number of the first preamble is equal to the number of a second preamble;
the number of the first preamble is less than the number of the second preamble; and
the number of the first preamble is greater than the number of the second preamble.

Optionally, the second preamble is available to the common terminal device.

Optionally, the first preamble is used for at least one of the following:

a preamble for contention-based random access;
a preamble for non-contention based random access; and
a preamble for random access for other purposes.

The indication apparatus according to the embodiment of the present application may execute the technical solution shown in the above method embodiments, and the implementation principles and beneficial effects thereof are similar, which will not be repeated herein.

FIG. 10 is schematic structural diagram II of an indication apparatus according to an embodiment of the present application. As shown in FIG. 10, the indication apparatus 100 includes:

a processing module 101, configured to determine or generate a corresponding random access preamble according to a second logical root sequence index; and
a sending module 102, configured to send the random access preamble to indicate a device type of the terminal device.

Optionally, the device type includes at least one of the following: a reduced capability device and a common device.

Optionally, the processing module 101 is further configured to:
obtain, according to the device type, the second logical root sequence index.

Optionally, the device type is the reduced capability device, and the processing module 101 is further configured to:

obtain a first parameter, a first logical root sequence index, and the number of the first preamble of the reduced capability device;
determine, according to the first parameter, a cyclic shift step value of the reduced capability device; and
obtain the second logical root sequence index according to the cyclic shift step value of the reduced capability device, the first logical root sequence index and the number of the first preamble.

Optionally, the first logical root sequence index is available to a common terminal device; and the second logical root sequence index is available to the reduced capability device.

Optionally, the processing module 101 is further configured to:

determine, according to the first parameter, a cyclic shift parameter of the reduced capability device; and
determine, according to the cyclic shift parameter of the reduced capability device, the cyclic shift step value of the reduced capability device.

Optionally, including:

$$D = \begin{cases} x \bmod 8 + 8 & RSRP \leq TH1, \ x \neq 0 \\ x & RSRP > TH1 \end{cases}$$

The 'D' is the cyclic shift parameter of the reduced capability device, the 'x' is the first parameter configured by a high layer, the 'RSRP' is reference signal received power of the reduced capability device, and the 'TH1' is a preset threshold.

Optionally, including:

$$D = \begin{cases} (x + y) \bmod 8 + 8 & RSRP \leq TH1, (x + y) \neq 0 \\ (x + y) & RSRP > TH1 \end{cases}$$

The 'D' is the cyclic shift parameter of the reduced capability device, the 'x' is the first parameter, the 'y' is the cyclic shift parameter of the common device, the 'RSRP' is reference signal received power of the reduced capability device, and the 'TH1' is a preset threshold.

Optionally, the first parameter includes at least one of the following:

a first preset value;

a parameter configured by a high layer; and

a parameter configured by radio resource control signaling; and a parameter configured by a system message.

Optionally, the processing module 101 is further configured to:
obtain the second logical root sequence index according to the cyclic shift step value of the reduced capability device, a last index of the first logical root sequence and the number of the first preamble.

Optionally, the first logical root sequence index and the second logical root sequence index are numerically consecutive.

Optionally, the processing module 101 is further configured to:

obtain a second parameter; and

obtain, according to the second parameter, the cyclic shift step value of the reduced capability device, the first logical root sequence index and the number of the first preamble, the second logical root sequence index.

Optionally, the second parameter includes at least one of the following:

a second preset value;

a parameter configured by radio resource control signaling; and

a parameter configured by a system message.

Optionally, it further includes at least one of the following:

the number of the first preamble is equal to the number of a second preamble;

the number of the first preamble is less than the number of the second preamble; and

the number of the first preamble is greater than the number of the second preamble.

Optionally, the second preamble is available to the common terminal device.

Optionally, the first preamble is used for at least one of the following:

a preamble for contention-based random access;

a preamble for non-contention based random access; and

a preamble for random access for other purposes.

The indication apparatus according to the embodiment of the present application may execute the technical solution shown in the above method embodiments, and the implementation principles and beneficial effects thereof are similar, which will not be repeated herein.

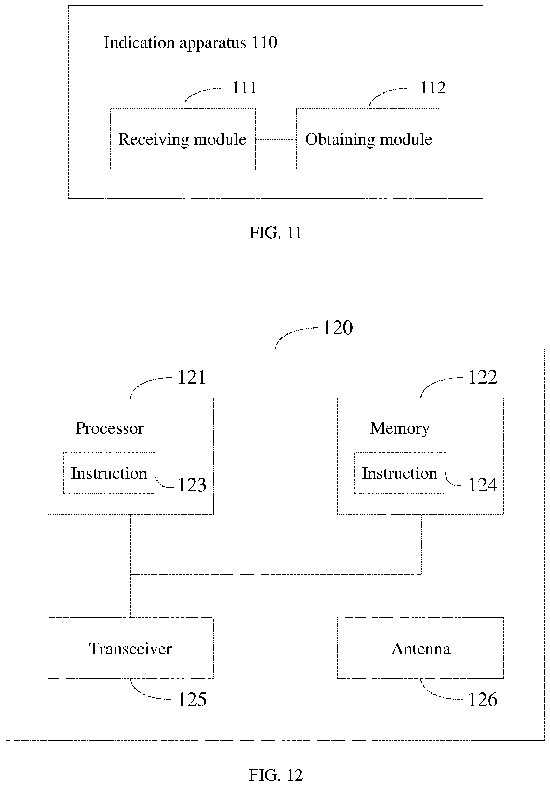

FIG. 11 is schematic structural diagram III of an indication apparatus according to an embodiment of the present application. As shown in FIG. 11, the indication apparatus 110 includes:

a receiving module 111, configured to receive a random access preamble; and

an obtaining module 112, configured to obtain, according to the random access preamble, a device type of a terminal device.

Optionally, the device type includes at least one of the following: a reduced capability device and a common device.

Optionally, the obtaining module 112 is specifically configured to:

if the random access preamble corresponds to a first logical root sequence index, the device type is a common device; and/or

if the random access preamble corresponds to a second logical root sequence index, the device type is a reduced capability device.

Optionally, the second logical root sequence index is determined or generated according to a first parameter, the first logical root sequence index and the number of a first preamble of the reduced capability device.

Optionally, the device type is a reduced capability device; and

the second logical root sequence index is determined or generated according to a cyclic shift step value of the reduced capability device, a last index of the first logical root sequence and the number of the first preamble.

Optionally, the cyclic shift step value of the reduced capability device is indicated by a cyclic shift parameter of the reduced capability device, and the first logical root sequence index and the second logical root sequence index are numerically consecutive.

Optionally, the device type is the Redcap device; and the second logical root sequence index is determined or generated according to the cyclic shift step value of the reduced capability device, a second parameter, the first logical root sequence index, and the number of the first preamble.

Optionally, the cyclic shift step value of the reduced capability device is indicated by the cyclic shift parameter of the reduced capability device.

Optionally,

$$D = \begin{cases} x \bmod 8 + 8 & RSRP \leq TH1, \ x \neq 0 \\ x & RSRP > TH1 \end{cases}$$

The 'D' is the cyclic shift parameter of the reduced capability device, the 'x' is the first parameter configured by a high layer, the 'RSRP' is reference signal received power of the reduced capability device, and the 'TH1' is a preset threshold.

Optionally,

$$D = \begin{cases} (x + y) \bmod 8 + 8 & RSRP \leq TH1, (x + y) \neq 0 \\ (x + y) & RSRP > TH1 \end{cases}$$

The 'D' is the cyclic shift parameter of the reduced capability device, the 'x' is the first parameter, the 'y' is the cyclic shift parameter of the common device, the 'RSRP' is reference signal received power of the reduced capability device, and the 'TH1' is a preset threshold.

Optionally, the first parameter includes at least one of the following:

a first preset value;
a parameter configured by a high layer;
a parameter configured by radio resource control signaling; and
a parameter configured by a system message.

Optionally, the second parameter includes at least one of the following:

a second preset value; and
a parameter configured by radio resource control signaling; and a parameter configured by a system message.

Optionally, it further includes at least one of the following:

the number of the first preamble is equal to the number of a second preamble;
the number of the first preamble is less than the number of the second preamble; and
the number of the first preamble is greater than the number of the second preamble.

Optionally, the first preamble is available to the reduced capability terminal device, and the second preamble is available to the common device.

Optionally, the first preamble is used for at least one of the following:

a preamble for contention-based random access;
a preamble for non-contention based random access; and
a preamble for random access for other purposes.

The indication apparatus according to the embodiment of the present application may execute the technical solution shown in the above method embodiments, and the implementation principles and beneficial effects thereof are similar, which will not be repeated herein.

FIG. 12 is a schematic structural diagram of a communication device according to an embodiment of the present application. As shown in FIG. 12, the communication device 120 in this embodiment may be a terminal device (or a component that can be used for the terminal device) or a network device (or a component that can be used for the network device) described in the above method embodiments. The communication device 120 may be configured to implement the method corresponding to the terminal device or the network device described in the above method embodiments. For details, please refer to the descriptions in the above method embodiments.

The communication device 120 may include one or more processors 121, which may also be referred to processing units and may implement functions in control or processing. The processor 121 may be a general-purpose processor or a special-purpose processor. For example, it may be a baseband processor, or a central processor. The baseband processor can be used to process communication protocols and communication data, and the central processor can be used to control the communication device, execute software programs, and process data of the software programs.

Optionally, the processor 121 may also store instruction 123 or data (for example, intermediate data). Optionally, the instruction 123 may be executed by the processor 121 to cause the communication device 120 to execute the method, described in the above method embodiments, corresponding to the terminal device or the network device.

Optionally, the communication device 120 may include a circuit which may implement the functions in transmission, or receiving, or communication described in the above method embodiments.

Optionally, the communication device 120 may include one or more memories 122 having stored thereon the instructions 124 which, when executed on the processor 121, cause the communication device 120 to perform the method described in the above method embodiments.

Optionally, the memory 122 also stores data. The processor 121 and the memory 122 can be provided separately or integrated together.

Optionally, the communication device 120 may also include a transceiver 125 and/or an antenna 126. The processor 121 may be referred to as a processing unit, for controlling the communication device 120 (the terminal device or the core network device or the radio access network device). The transceiver 125 may be referred to as a transceiving unit, a transmitter receiver, a transceiving circuit, or a transceiver, etc., for implementing the transceiving function of the communication device 120.

Optionally, in the case that the communication device 120 is used to implement operations corresponding to the terminal devices in the above embodiments, for example, a secondary node activation condition parameter may be obtained by the processor 121; and, according to the secondary node activation condition parameter, the transceiver 125 is triggered to send a secondary node activation request according to the preset rule, so as to obtain the secondary node activation response; and the connection between the terminal device and the secondary node is activated according to the secondary node activation response.

Optionally, for the specific implementation process of the processor 121 and the transceiver 125, please refer to relevant descriptions of the above embodiments, which will not be repeated herein.

Optionally, in the case that the communication device 120 is used to implement operations corresponding to the terminal devices in the above embodiments, for example, the secondary node activation request may be received by the transceiver 125. The processor 121 may generate a secondary node activation response according to the secondary node activation request, and trigger the transceiver 125 to send the secondary node activation response; and, the connection between the terminal device and the secondary node is activated according to the secondary node activation response.

Optionally, for the specific implementation process of the processor 121 and the transceiver 125, please refer to relevant descriptions of the above embodiments, which will not be repeated herein.

The processor 121 and the transceiver 125 described in the present application may be implemented on an IC (Integrated Circuit, integrated circuit), analog integrated circuit, RFIC (Radio Frequency Integrated Circuit, radio frequency integrated circuit), mixed-signal integrated circuit, ASIC (Application Specific Integrated Circuit, application specific integrated circuit), a PCB (Printed Circuit Board, printed circuit board), an electronic device, etc. The processor 121 and the transceiver 125 may also be manufactured by various integrated circuit technologies, such as a CMOS (Complementary Metal Oxide Semiconductor, complementary metal oxide semiconductor), a NMOS (N Metal-Oxide-Semiconductor, N metal-oxide-semiconductor), a PMOS (Positive Channel Metal Oxide Semiconductor, P metal oxide semiconductor), a BJT (Bipolar Junction Transistor, bipolar junction transistor), a bipolar CMOS (BiCMOS), silicon germanium (SiGe), gallium arsenide (GaAs), etc.

Although in the description of the above embodiments, the communication device is described by taking a terminal device or a network device as an example, the scope of the communication device described in the present application is not limited to the above terminal device or network device, and the structure of the communication device may not be limited by FIG. 12. The communication device may be a stand-alone device or may be part of a larger device.

An embodiment of the present application further provides a communication system, including: the terminal device according to any of the above embodiments; and the network device according to any of the above embodiments.

The present application also provides a communication device, including: a memory, a processor, and a computer program stored on the memory and executable on the processor, and the computer program, when executed by the processor, implements any of the above methods.

An embodiment of the present application further provides a readable storage medium having stored thereon a computer program which, when executed, implements any of the above methods.

An embodiment of the present application further provides a program product including the computer program code which, when running on a computer, causes a computer to perform any of the above methods.

An embodiment of the present application further provides a chip, including a memory and a processor, where the memory is used to store a computer program, and the processor is used to call and run the computer program from the memory, so that the device installed with the chip performs any of the above methods.

In the several embodiments provided by the present application, it should be understood that the disclosed device and method may be implemented in other ways. For example, the device embodiments described above are merely illustrative. For example, the division of the module is only a logical function division, and there may be other divisions in actual implementation. For example, multiple modules may be combined or be integrated into another system, or some features can be ignored or not implemented. In addition, coupling or direct coupling or communication connection with each other shown or discussed may be an indirect coupling or a communication connection through some interfaces, apparatuses or modules, and may be in electrical, mechanical or other forms.

The module described as a separate component may or may not be physically separated, and the component shown as the module may or may not be the physical unit, that is, it may be located in one place, or may be distributed to multiple network units. Some or all of the modules may be selected as required to achieve the object of the solution in this embodiment.

Optionally, each functional module in each embodiment of the present application may be integrated in one processing unit, or each module may exist physically alone, or two or more modules may be integrated in one unit. The unit integrated with the above modules can be implemented in the form of hardware, or can be implemented in the form of hardware plus software functional units.

The integrated module implemented in the form of software functional modules can be stored in a computer-readable storage medium. The above software function module is stored in a storage medium, and includes several instructions to enable a computer device (may be a personal computer, a server, or a network device, etc.) or a processor (English: processor) to perform part steps of the methods according to embodiments of the present application.

The above storage medium can be implemented by any type of volatile or non-volatile storage devices or combinations thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic disk or an optical disk. The storage medium can be any available medium that can be accessed by a general purpose computer or a special purpose computer.

An exemplary storage medium is coupled to the processor, such that the processor can read information from, and write information into, the storage medium. Of course, the storage medium can also be an integral part of the processor. The processor and the storage medium may be located in ASIC (Application Specific Integrated Circuits, application specific integrated circuit). Of course, the processor and storage medium may also exist in the device as discrete components.

It should be noted that the terms "include", "contain" or any other variation thereof as used herein are intended to cover non-exclusive inclusions, such that a process, a method, an article or an apparatus containing a series of elements includes not only those elements, but also other elements not expressly listed, or elements inherent to such process, method, article or apparatus. Without further limitation, the element defined by the statement "including one ..." does not exclude a case that there are other identical elements in the process, the method, the article or the apparatus that includes the element. In addition, components, features, and elements with the same name in different embodiments of the present application may have the same meaning or may have different meanings, and their specific meanings need to be determined by its explanation in this specific embodiment or by further combination with the context in this specific embodiment.

It should be understood that although the terms "first", "second", "third", etc. may be used herein to describe various information, such information should not be limited to these terms. These terms are only used to distinguish the same type of information from each other. For example, without departing from the scope of the present application, first information may also be referred to as second information, and similarly, the second information may also be referred to as the first information. Depending on the context, the word "if" as used herein can be interpreted as "at this point of" or "when" or "in response to determining". Furthermore, as used herein, the singular forms "a," "an," and "the" are intended to include the plural forms as well, unless the context dictates otherwise. It should be further understood that the terms "include", "comprise" indicate the presence of a feature, a step, an operation, an element, a component, an item, a category, and/or a group, but do not exclude the presence, the appearance or the addition of one or more other features, steps, operations, elements, components, items, categories, and/or groups. As used herein, the terms "or", "and/or", "including at least one of the following", etc. may be construed to be inclusive or to mean any one or any combination. For example, "including at least one of the following: A, B, and C" means "any one of the following: A; B; C; A and B; A and C; B and C; and A and B and C"; for another example, "A, B or C" or "A, B and/or C" means "any one of the following: A; B; C; A and B; A and C; B and C; and A and B and C". An exception to this definition occurs only in the case that combinations of elements, functions, steps, or operations are inherently exclusive with each other, in some way.

It should be understood that although the steps in the flowcharts of the embodiments of the present application are shown in sequence as indicated by the arrow, these steps are not necessarily executed in the sequence indicated by the arrows. Unless explicitly stated herein, these steps are not necessarily executed sequentially, and may be performed in other orders. Moreover, at least a part of the steps in the drawings may include multiple sub-steps or multiple stages, and these sub-steps or stages are not necessarily executed and completed at the same time, but may be executed at different times; and they are not necessarily executed sequentially, but can be executed alternately with other steps or at least part of sub-steps or stages of other steps.

Depending on the context, the words "if", "in the case" as used herein may be interpreted as "at this point of" or "when" or "in response to determining..." or "in response to detecting...". Similarly, depending on the context, the phrases "if it is determined" or "if it is detected (stated condition or event)" can be interpreted as "when it is determined" or "in response to determining..." or "when it is detected (stated condition or event)" or "in response to detecting (stated condition or event)".

It should be noted that, step codes such as S1 and S2 are used herein, to describe the corresponding content more clearly and briefly, and does not constitute a substantial restriction on the sequence. During specific implementation, those skilled in the art may perform S2 first, and then may perform S1, etc., which should all fall within the scope of protection of the present application.

It should be understood that the specific embodiments described herein are only used to explain the present application, but not to limit the present application.

In the following description, suffixes such as "module", "component" or "unit" used to represent elements are used only to facilitate the description of the present application, and have no specific meaning per se. Thus, "module", "component" or "unit" may be used interchangeably.

The terminal device can be implemented in various forms. For example, the terminal device described in the present application may include mobile terminals such as a mobile phone, a tablet computer, a notebook computer, a PDA, a personal digital assistant (Personal Digital Assistant, PDA), a portable media player (Portable Media Player, PMP), a navigation apparatus, a wearable device, a smart bracelet, and a pedometer, as well as fixed terminals such as a digital TV, and a desktop computer.

In this description, the mobile terminal will be taken as an example for illustration, and those skilled in the art will understand that in addition to elements specially used for mobile purposes, the configuration according to the implementation of the present application can also be applied to the terminal of fixed type.

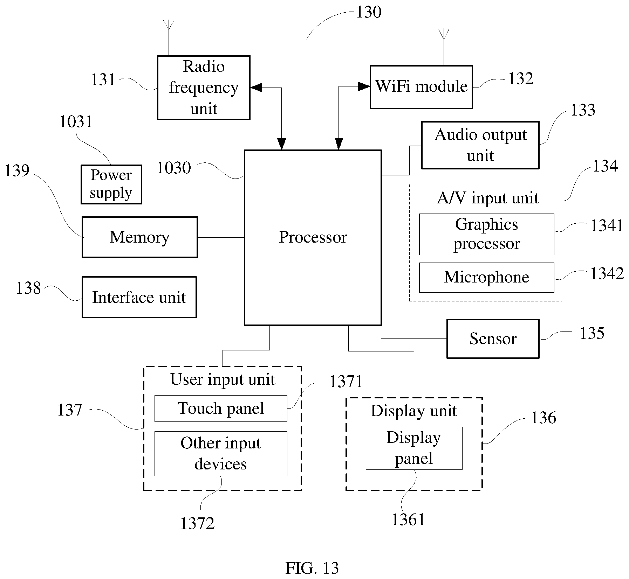

Please refer to FIG. 13, which is a schematic structural diagram of hardware of a mobile terminal implementing each embodiment of the present application, and the mobile terminal 130 may include: a RF (Radio Frequency, radio frequency) unit 131, a WiFi module 132, an audio output unit 133, an A/V (audio/video) input unit 134, a sensor 135, a display unit 136, a user input unit 137, an interface unit 138, a memory 139, a processor 1030, a power supply 1031 and other components. Those skilled in the art can understand that the structure of the mobile terminal shown in FIG. 13 does not constitute a limitation onto the mobile terminal, which may include more or fewer components than shown, or combine some components, or different component arrangements.

Components of the mobile terminal are introduced in detail below in conjunction with FIG. 13.

The radio frequency unit 131 can be used, during sending and receiving of information or during a call, for receiving and sending signals. Optionally, after downlink information of the base station is received, it is processed by the processor 1030; in addition, uplink data is sent to the base station. Generally, the radio frequency unit 131 includes, but is not limited to, an antenna, at least one amplifier, a transceiver, a coupler, a low noise amplifier, a duplexer, etc. In addition, the radio frequency unit 131 can also communicate with the network and other devices through wireless communication. The above wireless communication can use any communication standard or protocol, including but not limited to, GSM (Global System for Mobile Communication, global system for mobile communication), GPRS (General Packet Radio Service, general packet radio service), CDMA2000 (Code Division Multiple Access 2000, code division multiple access 2000), WCDMA (Wideband Code Division Multiple Access, wideband code division multiple access), TD-SCDMA (Time Division-Synchronous Code Division Multiple Access, time division-synchronous code division multiple access), FDD-LTE (Frequency Division Duplexing-Long Term Evolution, frequency division duplexing-long term evolution) and TDD-LTE (Time Division Duplexing-Long Term Evolution, time division duplexing-long term evolution), etc.

WiFi is a short-distance wireless transmission technology, through the WiFi module 132, the mobile terminal can help users to send and receive emails, browse web pages, access streaming media, etc., providing the users with wireless broadband Internet access. Although FIG. 13 shows the WiFi module 132, it can be understood that it is not a necessary component of the mobile terminal, and can be omitted as required without changing the essence of the invention.

In the case that the mobile terminal 130 is in a call signal receiving mode, a call mode, a recording mode, a voice recognition mode, a broadcast receiving mode, etc., the audio output unit 133 may convert the audio data received by the radio frequency unit 131 or the WiFi module 132 or the audio data stored in the memory 139 into the audio signal, and then output it as sound. Furthermore, the audio output unit 133 may also provide audio output related to a specific function performed by the mobile terminal 130 (for example, call signal reception sound, message reception sound, etc.). The audio output unit 133 may include a speaker, buzzer, etc.

The A/V input unit 134 is used to receive an audio or video signal. The A/V input unit 134 may include a graphics processor (Graphics Processing Unit, GPU) 1341 and a microphone 1342, where the graphics processor 1341 processes image data of a static image or video obtained by an image capturing apparatus (such as a camera) in a video capture mode or an image capture mode. The processed image frame may be displayed on the display unit 136. The image frame processed by the graphics processor 1341 may be stored in the memory 139 (or in other storage media) or be transmitted via the radio frequency unit 131 or WiFi module 132. The microphone 1342 may receive sound (audio data) via the microphone 1342 in operating modes involving a call mode, a recording mode, a voice recognition mode, etc., and can process such sound as audio data. The processed audio (voice) data can be converted, in the case of a call mode, into a format that can be transmitted to a mobile communication base station via the radio frequency unit 131 for output. The microphone 1342 may implement various types of noise cancellation (or suppression) algorithms, so as to remove (or suppress) noise or interference generated in the process of receiving and transmitting the audio signal.

The mobile terminal 130 also includes at least one sensor 135, such as a light sensor, a motion sensor, and other sensors. Specifically, the light sensor includes an ambient light sensor and a proximity sensor; optionally, the ambient light sensor can adjust the brightness of a display panel 1361 according to the brightness of the ambient light, and the proximity sensor can turn off the display panel 1361 and/or the backlight when the mobile terminal 130 moves to the user' ear. As a kind of motion sensor, the accelerometer sensor can detect magnitude of acceleration in all directions (generally three axes). In a static state, the magnitude and direction of gravity can be detected, so as to identify the application of mobile phone posture (such as horizontal and vertical screen switching, related games, and magnetometer posture calibration), vibration recognition related functions (such as pedometer, tapping), etc.; as for other sensors such as a fingerprint sensor, a pressure sensor, an iris sensor, a molecular sensor, a gyroscope, a barometer, a hygrometer, a thermometer, an infrared sensor, etc. that can be configured on the mobile phone, they will not be repeated herein.

The display unit 136 is used to display information input by the user or the information provided to the user. The display unit 136 may include the display panel 1361 which may be configured in the forms of a liquid crystal display (Liquid Crystal Display, LCD), an organic light-emitting diode (Organic Light-Emitting Diode, OLED), etc.

The user input unit 137 may be used to receive input numerical or character information, and generate key signal input related to user settings and function control of the mobile terminal. Specifically, the user input unit 137 may include a touch panel 1371 and other input devices 1372. The touch panel 1371, also referred to as a touch screen, may collect touch operations performed by the user on or near it (such as the user's operation on or near the touch panel 1371 using any suitable object or accessory such as a finger, a stylus, etc.), and drive the corresponding connection apparatus according to the preset program. The touch panel 1371 may include two parts, involving a touch detection apparatus and a touch controller. Optionally, the touch detection apparatus detects the touch orientation of the user, detects the signal from the touch operation, and transmits the signal to the touch controller. The touch controller receives the touch information from the touch detection apparatus, converts it into a contact coordinate, and sends it to the processor 1030, and can also receive and execute commands sent by the processor 1030. Furthermore, the touch panel 1371 can be implemented in various types of the resistance, capacitance, infrared, surface acoustic wave, etc. In addition to the touch panel 1371, the user input unit 137 may also include the other input devices 1372. Specifically, the other input device 1372 may include, but are not limited to, one or more of physical keyboards, function keys (such as volume control keys, switch keys, etc.), trackballs, mice, joysticks, etc., which are not specifically limited herein.

Optionally, the touch panel 1371 may cover the display panel 1361, and when the touch panel 1371 detects a touch operation on or near it, it transmits such operation to the processor 1030 to determine the type of the touch event, and then the processor 1030 provides corresponding visual output on the display panel 1361 according to the type of touch event. Although in FIG. 13, the touch panel 1371 and the display panel 1361 are used as two independent components to realize the input and output functions of the mobile terminal, but in some embodiments, the touch panel 1371 and the display panel 1361 can be integrated to realize the input and output functions of the mobile terminal, which is not specifically limited herein.

The interface unit 138 serves as an interface through which at least one external apparatus can be connected to the mobile terminal 130. For example, the external apparatus may include a wired or wireless headset port, an external power (or battery charger) port, a wired or wireless data port, a memory card port, a port for connecting an apparatus with the identification module, an audio input/output (I/O) port, a video I/O port, a headphone port, etc. The interface unit 138 may be used to receive input from external apparatuses (for example, data information, power, etc.), and transmit the received input to one or more elements within the mobile terminal 130, or may be used to transmit data between the mobile terminal 130 and the external apparatus.

The memory 139 may be used to store the software program as well as various types of data. The memory 139 may mainly include a program storage area and a data storage area. Optionally, the program storage area can store the operating system, the application program required for at least one function (such as a sound playback function, an image playback function, and the like), etc.; and the data storage area can store data (such as the audio data, phone book, etc.) created according to the use of the mobile phone, etc. Additionally, the memory 139 may include high-speed random access memory, and may also include a non-volatile memory, such as at least one magnetic disk storage device, a flash memory device, or other volatile solid state storage devices.

The processor 1030 is a control center of the mobile terminal, it uses various interfaces and lines to connect various parts of the entire mobile terminal, and perform various functions of the mobile terminal and processes data by running or executing software programs and/or modules stored in the memory 139 and by calling data stored in the memory 139, thereby monitoring the mobile terminal as a whole. The processor 1030 may include one or more processing units; preferably, the processor 1030 can integrate an application processor and a modem processor; optionally, the application processor mainly processes an operating system, a user interface, and an application program, etc., and the modem processor mainly processes wireless communication. It can be understood that the above modulation and demodulation processor may not be integrated into the processor 1030.

The mobile terminal 130 may also include a power supply 1031 (such as a battery) for supplying power to various components; preferably, the power supply 1031 can be logically connected to the processor 1030 through a power management system, so that functions such as charging, discharging, and power consumption management are implemented through the power management system.

Although not shown in FIG. 13, the mobile terminal 130 may also include a Bluetooth module, etc., which will not be repeated herein.

To facilitate understanding of the embodiments of the present application, a communication network system on which the mobile terminal of the present application is based is described below.

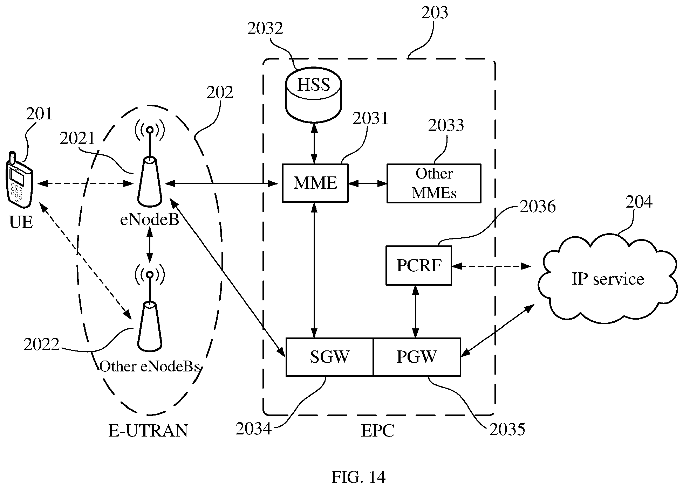

Refer to FIG. 14, which is an architecture diagram of a communication network system according to an embodiment of the present application. The communication network system is an LTE system of the universal mobile communication technology, and the LTE system includes UE (User Equipment, user equipment) 201 that are communicatively connected in sequence, a E-UTRAN (Evolved UMTS Terrestrial Radio Access Network, evolved UMTS terrestrial radio access network) 202, a EPC (Evolved Packet Core, evolved packet core) 203 and IP service 204 of the operator.

Specifically, the UE 201 may be the above mobile terminal 130, which will not be repeated herein.

E-UTRAN 202 includes eNodeB 2021, other eNodeB 2022, etc. Optionally, the eNodeB 2021 can be connected to other eNodeB 2022 through a backhaul (for example, X2 interface), the eNodeB 2021 is connected to the EPC 203, and the eNodeB 2021 can provide access from the UE 201 to the EPC 203.

EPC 203 may include a MME (Mobility Management Entity, mobility management entity) 2031, a HSS (Home Subscriber Server, home subscriber server) 2032, other MME 2033, SGW (Serving Gate Way, serving gate way) 2034, PGW (PDN Gate Way, PDN gate way) 2035 and PCRF (Policy and a Charging Rules Function, policy and charging rules function) 2036, etc. Optionally, the MME 2031 is a control node that processes signaling between the UE 201 and the EPC 203, and provides bearer and connection management. The HSS 2032 is used to provide some registers to manage functions such as the home location register (not shown in the figure), and store some user-specific information about service characteristics, data rates, etc. All user data can be sent through the SGW 2034, the PGW 2035 may provide IP address allocation and other functions for the UE 201, the PCRF 2036 is the policy and charging control policy decision point for service data flow and IP bearer resources, and it selects and provides the available policy and charging control decision for the policy and charging execution functional unit (not shown in the figure).

The IP service 204 may include the Internet, intranet, IMS (IP Multimedia Subsystem, IP multimedia subsystem), or other IP services.

Although the LTE system is taken as an example above for description, those skilled in the art should know that the present application is not only applicable to the LTE system, but also applicable to other wireless communication systems, such as the GSM, the CDMA2000, the WCDMA, the TD-SCDMA, and future new network systems, etc., which are not limited herein.

To better understand the embodiments of the present application, reference may be made to the above mobile terminal hardware structure and communication network system.

It can be understood that the above scenario is only an example, and does not constitute a limitation onto the application scenario of the technical solution provided in the embodiments of the present application, and the technical solutions of the present application can also be applied to other scenarios. For example, as those of ordinary skill in the art know, with the evolution of the system architecture and the emergence of new business scenarios, the technical solution provided in the embodiments of the present application are also applicable to similar technical problems.

The above serial numbers of the embodiments of the present application are only for description, and do not represent the advantages or disadvantages of the embodiments.

The steps in the method of the embodiments of the present application may be adjusted in order, combined and deleted as required.

Units in the device of the embodiments of the present application may be combined, divided, and deleted as required.

In the present application, the same or similar term concepts, technical solutions and/or application scenarios are, generally, only described in detail when they appear for the first time, in the case of the repeated term concepts, technical solutions and/or application scenarios below, no description is generally given, for brevity. In the process of understanding the technical solution and other contents of the present application, for the same or similar term concepts, technical solutions and/or application scenarios that are not described in detail latter, reference may be made to the related detailed descriptions before.

In the present application, the description of each embodiment has its own focus. For the part that is not described or recorded in detail in an embodiment, reference may be made to the relevant descriptions of other embodiments.

The technical features of the technical solution of the present application can be combined arbitrarily. In order to make the description concise, not all possible combinations of the technical features in the above embodiments are described. However, as long as there is no contradiction in the combination of these technical features, it should be regarded within the scope of the description of the present application.

From the above description of the implementations, those skilled in the art can clearly understand the methods according to the above embodiments can be implemented by means of software plus a necessary general hardware platform, and of course it can also be implemented by means of hardware, but in many cases the former is the better implementation. Upon such understanding, the technical solution of the present application can essentially, or the part of the technical solution of the present application that contributes to the prior art can, be embodied in the form of a software product. The computer software product is stored in a storage medium (such as the ROM/RAM, the magnetic disk, and the CD-ROM) as above, and includes several instructions to enable a terminal device (may be a mobile phone, a computer, a server, a controlled terminal or a network device, etc.) to perform the method according to each embodiment of the present application.

In the above embodiments, it may be implemented in whole or in part by software, hardware, firmware or any combination thereof. In the case that it is implemented in the software, it can be implemented in whole, or in part, in the form of a computer program product. A computer program product includes one or more computer instructions. When the computer program instructions are loaded and executed on a computer, the procedures or functions according to the embodiments of the present application are generated in whole, or in part. The computer may be a general purpose computer, a special purpose computer, a computer network, or other programmable apparatuses. The computer instructions may be stored in computer-readable storage medium or transmitted from one computer-readable storage medium to another computer-readable storage medium, for example, the computer instructions may be transmitted from a website site, a computer, a server, or a data center to another website site, computer, server or data center by wired (for example, coaxial cable, optical fiber, digital subscriber line) or wireless (for example, infrared, wireless, microwave, etc.) means. A computer-readable storage medium can be any available medium that can be accessed by a computer or a data storage device such as a server, a data center, or the like that includes an integration of one or more available media. The available medium may be a magnetic medium (for example, a floppy disk, a storage disk, and a magnetic tape), an optical medium (for example, a DVD), or a semiconductor medium (for example, a Solid State Disk (Solid State Disk, SSD)), etc.

The above are only the preferred embodiments of the present application, and are not intended to limit the patent scope of the present application. All equivalent structures or equivalent process transformations, made by using the contents of the description and drawings of the present application, or directly or indirectly applied in other related technical fields, are similarly included in the scope of patent protection of the present application.

## Claims

1. An indication method, applied to a terminal device, comprising the following steps:

    S1, determining or generating a corresponding random access preamble according to a device type of the terminal device; and
    S2, sending the random access preamble to indicate the device type.

2. The method according to claim 1, wherein the device type comprises at least one of the following: a reduced capability device and a common device.

3. The method according to claim 1, wherein the step S1 comprises:

   obtaining a corresponding logical root sequence index according to the device type; and
   determining or generating the random access preamble according to the logical root sequence index.

4. The method according to claim 3, wherein the device type is the reduced capability device, and the obtaining the corresponding logical root sequence index according to the device type comprises:

   obtaining a first parameter, a first logical root sequence index, and the number of a first preamble of the reduced capability device;
   determining, according to the first parameter, a cyclic shift step value of the reduced capability device; and
   obtaining, according to the cyclic shift step value of the reduced capability device, the first logical root sequence index and the number of the first preamble, a second logical root sequence index.

5. The method according to claim 4, wherein the first logical root sequence index is available to the common device; and the second logical root sequence index is available to the reduced capability device.

6. The method according to claim 4, wherein the determining, according to the first parameter, the cyclic shift step value of the reduced capability device comprises:

   determining, according to the first parameter, a cyclic shift parameter of the reduced capability device; and
   determining, according to the cyclic shift parameter of the reduced capability device, the cyclic shift step value of the reduced capability device.

7. The method according to claim 6, wherein the cyclic shift parameter of the reduced capability device and the first parameter meet the following condition:

$$D = \begin{cases} x \bmod 8 + 8 & \text{RSRP} \leq \text{TH1}, \quad x \neq 0 \\ x & \text{RSRP} > \text{TH1} \end{cases}$$

   wherein the 'D' is the cyclic shift parameter of the reduced capability device, the 'x' is the first parameter configured by a high layer, the 'RSRP' is reference signal received power of the reduced capability device, and the 'TH1' is a preset threshold.

8. The method according to claim 6, wherein the cyclic shift parameter of the reduced capability device and the first parameter meet the following condition:

$$D = \begin{cases} (x + y) \bmod 8 + 8 & \text{RSRP} \leq \text{TH1}, (x + y) \neq 0 \\ (x + y) & \text{RSRP} > \text{TH1} \end{cases}$$

   wherein the 'D' is the cyclic shift parameter of the reduced capability device, the 'x' is the first parameter, the 'y' is the cyclic shift parameter of the common device, the 'RSRP' is reference signal received power of the reduced capability device, and the 'TH1' is a preset threshold.

9. The method according to claim 8, wherein the first parameter comprises at least one of the following:

   a first preset value;
   a parameter configured by a high layer;
   a parameter configured by radio resource control signaling; and
   a parameter configured by a system message.

10. The method according to any one of claims 4 to 9, wherein the obtaining, according to the cyclic shift step value of the reduced capability device, the first logical root sequence index and the number of the first preamble, the second logical root sequence index comprises:
   obtaining, according to the cyclic shift step value of the reduced capability device, a last index of the first logical root sequence and the number of the first preamble, the second logical root sequence index.

**11.** The method according to any one of claims 4 to 9, wherein the obtaining, according to the cyclic shift step value of the reduced capability device, the first logical root sequence index and the number of the first preamble, the second logical root sequence index comprises:

obtaining a second parameter;
obtaining, according to the second parameter, the cyclic shift step value of the reduced capability device, the first logical root sequence index and the number of the first preamble, the second logical root sequence index.

**12.** The method according to claim 11, wherein the second parameter comprises at least one of the following:

a second preset value;
a parameter configured by radio resource control signaling; and
a parameter configured by a system message.

**13.** The method according to any one of claims 4 to 9, further comprising at least one of the following:

the number of the first preamble is equal to the number of a second preamble;
the number of the first preamble is less than the number of the second preamble; and
the number of the first preamble is greater than the number of the second preamble.

**14.** The method according to claim 13, wherein the first preamble comprises at least one of the following:

a preamble for contention-based random access;
a preamble for non-contention based random access; and
a preamble for random access for other purposes.

**15.** An indication method, applied to a terminal device, comprising the following steps:

S11, determining or generating a corresponding random access preamble according to a second logical root sequence index; and
S12, sending the random access preamble to indicate a device type of the terminal device.

**16.** The method according to claim 15, wherein the device type comprises at least one of the following: a reduced capability device and a common device.

**17.** The method according to claim 15, wherein a method for determining or generating the second logical root sequence index comprises:
obtaining, according to the device type, the second logical root sequence index.

**18.** The method according to claim 17, wherein the device type is a reduced capability device, and the obtaining, according to the device type, the second logical root sequence index comprises:

obtaining a first parameter, a first logical root sequence index, and the number of the first preamble of the reduced capability device;
determining, according to the first parameter, a cyclic shift step value of the reduced capability device; and
obtaining, according to the cyclic shift step value of the reduced capability device, the first logical root sequence index and the number of the first preamble, the second logical root sequence index.

**19.** The method according to claim 18, wherein the first logical root sequence index is available to a common terminal device; and the second logical root sequence index is available to a reduced capability terminal device.

**20.** The method according to claim 18, wherein the determining, according to the first parameter, the cyclic shift step value of the reduced capability device comprises:

determining, according to the first parameter, a cyclic shift parameter of the reduced capability device; and
determining, according to the cyclic shift parameter of the reduced capability device, the cyclic shift step value of the reduced capability device.

21. The method according to claim 20, wherein the cyclic shift parameter of the reduced capability device and the first parameter meet the following condition:

$$D = \begin{cases} x \bmod 8 + 8 & RSRP \leq TH1, \ x \neq 0 \\ x & RSRP > TH1 \end{cases}$$

wherein the 'D' is the cyclic shift parameter of the reduced capability device, the 'x' is the first parameter configured by a high layer, the 'RSRP' is reference signal received power of the reduced capability device, and the 'TH1' is a preset threshold.

22. The method according to claim 20, wherein the cyclic shift parameter of the reduced capability device and the first parameter meet the following condition:

$$D = \begin{cases} (x+y) \bmod 8 + 8 & RSRP \leq TH1, \ (x+y) \neq 0 \\ (x+y) & RSRP > TH1 \end{cases}$$

wherein the 'D' is the cyclic shift parameter of the reduced capability device, the 'x' is the first parameter, the 'y' is the cyclic shift parameter of the common device, the 'RSRP' is reference signal received power of the reduced capability device, and the 'TH1' is a preset threshold.

23. The method according to claim 22, wherein the first parameter comprises at least one of the following:

    a first preset value;
    a parameter configured by a high layer;
    a parameter configured by radio resource control signaling; and
    a parameter configured by a system message.

24. The method according to any one of claims 18 to 23, wherein the obtaining, according to the cyclic shift step value of the reduced capability device, the first logical root sequence index and the number of the first preamble, the second logical root sequence index comprises:
obtaining, according to the cyclic shift step value of the reduced capability device, a last index of the first logical root sequence and the number of the first preamble, the second logical root sequence index.

25. The method according to any one of claims 18 to 23, wherein the obtaining, according to the cyclic shift step value of the reduced capability device, the first logical root sequence index and the number of the first preamble, the second logical root sequence index comprises:

    obtaining a second parameter; and
    obtaining, according to the second parameter, the cyclic shift step value of the reduced capability device, the first logical root sequence index and the number of the first preamble, the second logical root sequence index.

26. The method according to claim 25, wherein the second parameter comprises at least one of the following:

    a second preset value;
    a parameter configured by radio resource control signaling; and
    a parameter configured by a system message.

27. The method according to any one of claims 18 to 23, further comprising at least one of the following:

    the number of the first preamble is equal to the number of a second preamble;
    the number of the first preamble is less than the number of the second preamble; and
    the number of the first preamble is greater than the number of the second preamble.

28. The method according to claim 27, wherein the first preamble comprises at least one of the following:

    a preamble for contention-based random access;

a preamble for non-contention based random access; and
a preamble for random access for other purposes.

29. An indication method, applied to a network device, comprising the following steps:

S3, receiving a random access preamble; and
S4, obtaining, according to the random access preamble, a device type of the terminal device.

30. The method according to claim 29, wherein the device type comprises at least one of the following: a reduced capability device and a common device.

31. The method according to claim 29, wherein the obtaining, according to the random access preamble, the device type of the terminal device comprises:

if the random access preamble corresponds to a first logical root sequence index, the device type is a common device;
and/or, if the random access preamble corresponds to a second logical root sequence index, the device type is a reduced capability device; and
the second logical root sequence index is determined or generated according to a first parameter, the first logical root sequence index and the number of a first preamble of the reduced capability device.

32. The method according to claim 31, wherein the device type is a reduced capability device;

the second logical root sequence index is determined or generated according to a cyclic shift step value of the reduced capability device, a last index of the first logical root sequence and the number of the first preamble; and
the cyclic shift step value of the reduced capability device is indicated by a cyclic shift parameter of the reduced capability device, and the first logical root sequence index and the second logical root sequence index are numerically consecutive.

33. The method according to claim 31, wherein the device type is the reduced capability device;

the second logical root sequence index is determined or generated according to the cyclic shift step value of the reduced capability device, a second parameter, the first logical root sequence index, and the number of the first preamble; and
the cyclic shift step value of the reduced capability device is indicated by the cyclic shift parameter of the reduced capability device.

34. The method according to claim 32 or 33, wherein the cyclic shift parameter of the reduced capability device and the first parameter meet the following condition:

$$D = \begin{cases} x \bmod 8 + 8 & RSRP \leq TH1, \quad x \neq 0 \\ x & RSRP > TH1 \end{cases}$$

wherein the 'D' is the cyclic shift parameter of the reduced capability device, the 'x' is the first parameter configured by a high layer, the 'RSRP' is reference signal received power of the reduced capability device, and the 'TH1' is a preset threshold.

35. The method according to claim 32 or 33, wherein the cyclic shift parameter of the reduced capability device and the first parameter meet the following condition:

$$D = \begin{cases} (x + y) \bmod 8 + 8 & RSRP \leq TH1, (x + y) \neq 0 \\ (x + y) & RSRP > TH1 \end{cases}$$

wherein the 'D' is the cyclic shift parameter of the reduced capability device, the 'x' is the first parameter, the 'y' is the cyclic shift parameter of the common device, the 'RSRP' is reference signal received power of the reduced capability device, and the 'TH1' is a preset threshold.

36. The method according to claim 35, wherein the first parameter comprises at least one of the following:

    a first preset value;
    a parameter configured by a high layer;
    a parameter configured by radio resource control signaling; and
    a parameter configured by a system message.

37. The method according to claim 33, wherein the second parameter comprises at least one of the following:

    a second preset value;
    a parameter configured by radio resource control signaling; and
    a parameter configured by a system message.

38. The method according to any one of claims 31 to 33, further comprising at least one of the following:

    the number of the first preamble is equal to the number of a second preamble;
    the number of the first preamble is less than the number of the second preamble; and
    the number of the first preamble is greater than the number of the second preamble.

39. The method according to claim 38, wherein the first preamble comprises at least one of the following:

    a preamble for contention-based random access;
    a preamble for non-contention based random access; and
    a preamble for random access for other purposes.

40. A communication system, comprising:

    a terminal device, configured to perform the method according to claims 1 to 28; and
    a network device, configured to perform the method according to claims 29 to 39.

41. A communication device, comprising: a memory and a processor; wherein

    the memory is configured to store program instructions; and
    the processor is configured to call the program instructions in the memory to perform the method according to any one of claims 1 to 39.

42. A readable storage medium, wherein the readable storage medium has stored thereon a computer program which, when executed, implements the method according to any one of claims 1 to 39.

43. A computer program product, comprising a computer program which, when executed, implements the method according to any one of claims 1 to 39.

Network device

Terminal device

FIG. 1

| Terminal device | | Network device |
|---|---|---|

S21、Msg1

S22、Msg2

S23、Msg3

S24、Msg4

FIG. 2

| Terminal device | | Network device |
|---|---|---|

S31、MsgA

S32、MsgB

FIG. 3

| Terminal device | | Network device |
|---|---|---|

S1, determine or generate a corresponding random access preamble according to a device type of the terminal device

S2, send the random access preamble to indicate the device type

S3, receive a random access preamble

S4, obtain, according to the random access preamble, the device type of the terminal device

FIG. 4

Obtain, according to the device type, a corresponding logical root sequence index — S51

Determine or generate a random access preamble according to the logical root sequence index — S52

FIG. 5

Determine or generate a corresponding random access preamble according to a second logical root sequence index ⌐ S61

Send the random access preamble to indicate the device type of the terminal device ⌐ S62

FIG. 6

Receive the random access preamble ⌐ S71

Obtain, according to the random access preamble, the device type of the terminal device ⌐ S72

FIG. 7

Preambles for non-contention based access associated with SSB#1

Preambles for other purposes, such as SI request

n=0    n=1    n=7

| 0 | 1 | 2 | 3 | 4 | 5 | 6 | 7 | 8 | 9 | 10 | 11 | 12 | 13 | 14 | ... | 48 | 49 | 50 | 51 | 52 | 53 | 54 | 55 | 56 | 57 | ... | 63 |

R=4 preambles for contention-based access

R=4 preambles for contention-based access

R=4 preambles for contention-based access

SSB#0       SSB#1       SSB#7

Preambles for contention-based and non-contention based random access
(TotalNumberOfRA-Preambles)

FIG. 8

Indication apparatus 90

91                                    92

Processing module —— Sending module

FIG. 9

Indication apparatus 100

101                                   102

Processing module —— Sending module

FIG. 10

Indication apparatus 110

┌─ 111        ┌─ 112

| Receiving module | Obtaining module |

FIG. 11

┌─ 120

┌─ 121        ┌─ 122

Processor

Instruction ⌐ 123

Memory

Instruction ⌐ 124

Transceiver

Antenna

⌐ 125        ⌐ 126

FIG. 12

131 — Radio frequency unit

130

WiFi module — 132

1031

1030

139 — Power supply

Memory

Processor

Audio output unit — 133

A/V input unit — 134

Graphics processor — 1341

Microphone — 1342

138 — Interface unit

Sensor — 135

User input unit

137 — Touch panel

1371

Other input devices

1372

Display unit

Display panel

136

1361

FIG. 13

FIG. 14

## INTERNATIONAL SEARCH REPORT

| | International application No. |
|---|---|
| | **PCT/CN2021/113599** |

### A. CLASSIFICATION OF SUBJECT MATTER

H04W 74/08(2009.01)i; H04W 72/04(2009.01)i; H04W 4/00(2018.01)n

According to International Patent Classification (IPC) or to both national classification and IPC

### B. FIELDS SEARCHED

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: Redcap, Reduced Capability, 轻型能力, 能力受限, 能力缩减, 低能力, 前导码, 前导序列, 随机接入, 类型, 循环移位, 步进, 间隔, 根序列, 基准序列, 基序列, 逻辑, preamble, RootSequenceIndex, root, RSRP, zeroCorrelationZoneConfig, NZC, NCS, type

### C. DOCUMENTS CONSIDERED TO BE RELEVANT

| Category* | Citation of document, with indication, where appropriate, of the relevant passages | Relevant to claim No. |
|---|---|---|
| X | WO 2014023026 A1 (HUAWEI TECHNOLOGIES CO., LTD.) 13 February 2014 (2014-02-13) description, pages 1-2 and 6-44 | 1-43 |
| X | WO 2014067107 A1 (FUJITSU LTD. et al.) 08 May 2014 (2014-05-08) description, page 7 line 20-page 24 line 16 | 1-43 |
| X | HUAWEI et al. "RAN1 aspects of RedCap UE type and identification" *R1-2104287, 3GPP TSG RAN WG1 Meeting #105-e,* 27 May 2021 (2021-05-27), pp. 2-3 | 1-2, 29-30, 40-43 |
| A | CN 105208669 A (CHINA MOBILE COMMUNICATIONS CORP.) 30 December 2015 (2015-12-30) entire document | 1-43 |
| A | CN 111315034 A (SICHUAN CHUANGWISHENG TECHNOLOGY CO., LTD.) 19 June 2020 (2020-06-19) entire document | 1-43 |
| A | US 2020068617 A1 (LG ELECTRONICS INC.) 27 February 2020 (2020-02-27) entire document | 1-43 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 May 2022** | **18 May 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/113599**

| Patent document cited in search report | | | Publication date (day/month/year) | Patent family member(s) | | | Publication date (day/month/year) |
|---|---|---|---|---|---|---|---|
| WO | 2014023026 | A1 | 13 February 2014 | CN | 103748942 | A | 23 April 2014 |
| | | | | US | 2015156760 | A1 | 04 June 2015 |
| | | | | EP | 2876955 | A1 | 27 May 2015 |
| WO | 2014067107 | A1 | 08 May 2014 | CN | 104604320 | A | 06 May 2015 |
| CN | 105208669 | A | 30 December 2015 | None | | | |
| CN | 111315034 | A | 19 June 2020 | None | | | |
| US | 2020068617 | A1 | 27 February 2020 | WO | 2018160046 | A1 | 07 September 2018 |

Form PCT/ISA/210 (patent family annex) (January 2015)